# EUROPÄISCHE PATENTSCHRIFT

(11) **EP 3 628 516 B1**
(45) Veröffentlichungstag und Bekanntmachung des Hinweises auf die Patenterteilung: **30.03.2022**
(21) Anmeldenummer: 19198738.7
(22) Anmeldetag: 20.09.2019
(51) Int. Cl.: B60H 1/00

(54) **MODULARE KLIMATISIERUNGSVORRICHTUNG FÜR EIN KRAFTFAHRZEUG SOWIE VERFAHREN ZUR VORKONFIGURATION EINER MODULAREN KLIMATISIERUNGSVORRICHTUNG**
MODULAR AIR-CONDITIONING DEVICE FOR A MOTOR VEHICLE AND METHOD FOR PRECONFIGURING A MODULAR AIR CONDITIONING DEVICE
CLIMATISEUR MODULAIRE POUR UN VÉHICULE AUTOMOBILE ET
PROCÉDÉ DE PRÉ-CONFIGURATION D'UN CLIMATISEUR MODULAIRE

(30) Priorität: 25.09.2018 DE 102018123558
(43) Veröffentlichungstag der Anmeldung: 01.04.2020
(73) Patentinhaber: MAN Truck & Bus SE, 80995 München (DE)
(72) Erfinder: Peteranderl, Christian, 80636 München (DE); Bernath, Michael, 80637 München (DE); Yildirim, Kemal-Edip, 82194 Gröbenzell (DE); Köhler, Jürgen, 38173 Sickte (DE)
(74) Vertreter: v. Bezold & Partner Patentanwälte - PartG mbB

(56) Entgegenhaltungen:
- EP-A1- 1 127 767
- EP-A1- 2 719 966
- CN-U- 201 890 111
- DE-T2-602004 003 044

## Beschreibung

Die Erfindung betrifft eine modulare Klimatisierungsvorrichtung für ein Kraftfahrzeug, vorzugsweise für ein elektrisch angetriebenes Kraftfahrzeug, sowie ein Kraftfahrzeug mit einer entsprechenden modularen Klimatisierungsvorrichtung. Ferner betrifft die Erfindung ein Verfahren zur Vorkonfiguration einer modularen Klimatisierungsvorrichtung.

Die zunehmende Elektrifizierung des Antriebsstrangs im Kraftfahrzeugbereich stellt auch die Klimatisierung des Fahrzeuginnenraums, insbesondere dessen Beheizung, vor neue Herausforderungen. Während im Fall von rein verbrennungsmotorisch angetriebenen Kraftfahrzeugen ausreichend Abwärme des Verbrennungsmotors zur Beheizung des Fahrgastraums zur Verfügung steht, fehlt diese Wärmequelle bei rein elektrisch angetriebenen Kraftfahrzeugen. Entsprechend muss dort auf zusätzliche Heizvorrichtungen zurückgegriffen werden.

In diesem Zusammenhang ist im Stand der Technik bekannt - zusätzlich zu Kältemaschinen zur Kühlung - Elektroheizungen, beispielsweise in Form von Stromdirektheizungen, zur Klimatisierung des Fahrzeuginnenraums zu verwenden. Wesentlich effizienter als eine direkte Elektroheizung ist jedoch eine elektrisch angetriebene Wärmepumpenheizung. Durch diese Technologie kann pro Einheit elektrischer Energie eine mehrfache Menge von Wärme erzeugt werden, indem zusätzlich Wärme aus der Umgebungsluft oder aus anderen Abwärmequellen genutzt wird. Ein System zur Fahrzeuginnenraumklimatisierung, das unter anderem auf diesem Prinzip beruht, ist beispielsweise aus der EP 2 660 0861 A1 bekannt.

Weiterhin ist aus der EP 2 719 966 A1 ein Kühl- und Klimagerät bekannt, das in der Lage ist, einen Vorgang zum Abtauen eines Außenwärmetauschers in einem Heizbetrieb unter solchen Luftbedingungen durchzuführen, dass der Außenwärmetauscher vereist wird, während der Heizbetrieb fortgesetzt wird. Dazu umfasst die Kühl- und Klimaanlage mehrere Kühlzyklen, von denen jeder einen Kompressor, ein Vierwegeventil, einen Innen-Wärmetauscher, eine Druckreduziervorrichtung und einen Außen-Wärmetauscher umfasst, die durch ein Rohr verbunden sind, wobei jeder Kühlzyklus so konfiguriert ist, dass er einen Kühlbetrieb und einen Heizbetrieb durchführen kann. Die Kühl- und Klimaanlage umfasst ferner einen Außen-Ventilator, der so konfiguriert ist, dass er Luft zum Wärmeaustausch mit den Außen-Wärmetauschern der Kühlzyklen schickt, mehrere Innen-Ventilatoren, die entsprechend den jeweiligen Innen-Wärmetauschern der Kühlzyklen angeordnet sind, wobei jeder Innenlüfter so konfiguriert ist, dass er einen Luftstrom erzeugt, der durch den jeweiligen Innenwärmetauscher zu einem Klimatisierungs-Zielraum geschickt wird, und eine Steuerung, die so konfiguriert ist, dass sie, wenn mindestens einer der Kühlzyklen einen Abtauvorgang zum Abtauen des Außenwärmetauschers des mindestens einen Kühlzyklus beginnt, eine Drehzahl des Innenlüfters entsprechend dem Kühlzyklus, der den Abtauvorgang durchführt, so steuert, dass eine Temperatur der Luft, die durch die durch die Innenlüfter geschickte Luft gemischt wird, eine vorbestimmte Temperatur erreicht.

Problematisch an derartigen Systemen ist jedoch oftmals, dass im Falle eines technischen Defekts im Kältemittelkreislauf für das gesamte Kraftfahrzeug keine ausreichende Heiz- bzw. Kühlleistung mehr zur Verfügung steht. Weiterhin problematisch ist, dass gerade im Nutzfahrzeugbereich - im Speziellen im Fall von Omnibussen - große Distanzen zwischen den einzelnen Hauptkomponenten der Klimaanlagen zu überwinden sind, was einerseits die Installation einer beachtlichen Länge an teuren Hochdruckkühlleitungen bedingt und anderseits die Anfälligkeit für Leckagen erhöht. Ferner ist in den bestehenden Systemen eine räumlich flexibel variierbares Regeln der Heiz- bzw. Kühlleistung sowie ein Anpassen an veränderte Betriebsbedingungen oftmals nicht möglich.

Entsprechend ist es daher Aufgabe der Erfindung eine Klimatisierungsvorrichtung für ein Kraftfahrzeug, ein Kraftfahrzeug sowie ein Verfahren zur Vorkonfiguration bereitzustellen, mit welchen Nachteile der bisherigen Lösungen vermieden werden können. Insbesondere ist Aufgabe der Erfindung eine effiziente Klimatisierungsvorrichtung mit hoher Ausfallsicherheit bereitzustellen, deren Heiz- und/oder Kühlleistung räumlich variiert werden kann und die flexibel an sich verändernde Betriebsbedingungen angepasst werden kann.

Diese Aufgaben werden erfindungsgemäß durch eine modulare Klimatisierungsvorrichtung sowie ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße modulare Klimatisierungsvorrichtung für ein Kraftfahrzeug umfasst dabei mindestens zwei Klimatisierungsmodule, die jeweils wiederum einen Kältemittelkreislauf umfassen. Jeder der Kältemittelkreisläufe umfasst einen Verdichter, einen ersten Wärmeübertrager zum Wärmeaustausch mit einem Fahrzeugaußenraum und/oder einer Komponente eines elektrischen Antriebs, eine erste Drosseleinrichtung und einen zweiten Wärmeübertrager zum Wärmeaustausch mit einem Fahrzeuginnenraum und/oder einer Komponente eines elektrischen Antriebs. Weiterhin weist jeder der Kältemittelkreisläufe eine Ventileinrichtung auf, umfassend eine Mehrzahl von Ventilen, zur Steuerung eines Kältemittelflusses innerhalb des Kältemittelkreislaufs, mittels derer der erste Wärmeübertrager in einem ersten Betriebsmodus M₁, vorzugsweise zur Fahrzeuginnenraumkühlung und/oder zur Kühlung einer Komponente eines elektrischen Antriebes, stromauf und in einem zweiten Betriebsmodus M₂, vorzugsweise zur Fahrzeuginnenraumheizung und/oder zur Beheizung einer Komponente eines elektrischen Antriebes, stromab vom zweiten Wärmeübertrager im Kältemittelkreislauf schaltbar ist. Die Begriffe "stromauf" und "stromab" sind dabei in Bezug auf den Verdichter als Quelle zu verstehen. Mit anderen Worten fungiert der Kältemittelkreislauf eines Klimatisierungsmoduls im ersten Betriebsmodus M₁ als Kältemaschine, vorzugsweise zur Kühlung des Fahrzeuginnenraums und/oder zur Kühlung einer Komponente eines elektrischen Antriebes, und im zweiten Betriebsmodus M₂ als Wärmepumpe, vorzugsweise zur Erwärmung des Fahrzeuginnenraums und/oder zur Beheizung einer Komponente eines elektrischen Antriebes. Des Weiteren umfasst jedes der Klimatisierungsmodule eine Modul-Steuereinrichtung zur Ansteuerung der jeweiligen Ventileinrichtung und/oder des Verdichters. Vorzugsweise ist dabei der Verdichter ein elektrisch angetriebener Verdichter und/oder das Kraftfahrzeug ein elektrisch angetriebenes Kraftfahrzeug.

Ferner umfasst die Klimatisierungsvorrichtung eine zentrale Steuereinrichtung, die ausgebildet ist, in Abhängigkeit mindestens einer überwachten Betriebsbedingung eine Anzahl aktiver Klimatisierungsmodule festzulegen und festzulegen, ob ein aktives Klimatisierungsmodul im ersten oder zweiten Betriebsmodus M₁ oder M₂ betrieben wird. Dies schließt jedoch nicht aus, dass die Klimatisierungsmodule wahlweise auch in weiteren Betriebsmodi betrieben werden können. Vorzugsweise können die Betriebsmodi der einzelnen Klimatisierungsmodule dabei unabhängig voneinander festgelegt werden. Weiterhin kann es sich bei der mindestens einen überwachten Betriebsbedingung um eine Information betreffend den Betrieb ein oder mehrerer Klimatisierungsmodule, beispielsweise die bislang geleisteten Arbeitsstunden der einzelnen Klimatisierungsmodule, eine Umgebungsinformation, beispielsweise eine Außentemperatur, und/oder um eine von diesen Informationen abgeleitete Größe handeln. Dabei kann die zentrale Steuereinrichtung auch zur Überwachung der mindestens einen Betriebsbedingung ausgebildet sein.

Insgesamt wird somit auf vorteilhafte Weise eine modulare Klimatisierungsvorrichtung für ein Kraftfahrzeug bereitgestellt, bei der die einzelnen Klimatisierungsmodule gleichzeitig unterschiedliche Funktionen ausführen können, bzw. die Anzahl der betriebenen Klimatisierungsmodule variabel eingestellt werden kann. Ferner kann auch die von einem einzelnen Klimatisierungsmodul abgegebene bzw. aufgenommene Wärmemenge und damit auch deren Temperaturniveau unabhängig von den anderen Modulen festgelegt werden, wobei dies von der zentralen Steuereinrichtung koordiniert wird. In diesem Zusammenhang kann somit auch von einem Master-Slave-System gesprochen werden, wobei die zentrale Steuereinrichtung als Master-Einheit und die Klimatisierungsmodule als Slave-Einheiten bezeichnet werden können, die Steuerbefehle von der zentrale Steuereinrichtung erhalten. Hierbei ist es für den Fachmann zudem offensichtlich, dass die eben beschriebene Klimatisierungsvorrichtung eine beliebige Anzahl an Klimatisierungsmodulen umfassen kann und nicht auf zwei Klimatisierungsmodule beschränkt ist. Ebenso kann eine beliebige Anzahl an Betriebsbedingungen überwacht werden. Auf vorteilhafte Weise wird damit eine modulare und damit skalierbare bzw. je nach Einsatzbereich und/oder Kraftfahrzeug flexibel anpassbare Klimatisierungsvorrichtung bereitgestellt, bei der auch im Fall eines Defekts einzelner Module auch weiterhin eine ausreichende Klimatisierung des Kraftfahrzeugs sichergestellt werden kann.

Nach einem ersten Aspekt der Erfindung kann die mindestens eine Betriebsbedingung erfüllt sein, falls eine Vereisung mindestens eines Klimatisierungsmoduls vorliegt. Zudem oder alternativ kann die mindestens eine Betriebsbedingung auch dann erfüllt sein, falls eine Vereisung mindestens eines Klimatisierungsmoduls droht, jedoch noch nicht tatsächlich vorliegt. Dass eine Vereisung und/oder eine drohende Vereisung vorliegt kann hierbei beispielsweise dadurch angezeigt werden, dass eine im Kältemittelkreislauf, insbesondere am ersten oder zweiten Wärmeübertrager, gemessene Temperatur einen bestimmten Schwellenwert unterschreitet. Ferner kann die zentrale Steuereinrichtung ausgebildet sein, vereiste Klimatisierungsmodule zu bestimmen und diese in einem Enteisungsmodus zur Reduzierung einer Vereisung zu betreiben. Mit anderen Worten kann die die zentrale Steuereinrichtung ausgebildet sein, zu ermitteln welche der vorhandenen Klimatisierungsmodule in einem vereisten Zustand vorliegen und diese, vorzugsweise nur diese, dann in einem vorbestimmten Betriebsmodus zu betreiben. Zudem oder alternativ kann die zentrale Steuereinrichtung auch ausgebildet sein, die Klimatisierungsmodule zu bestimmen, die von einer Vereisung bedroht sind, und diese in einem Enteisungsmodus zur Prävention einer Vereisung zu betreiben. Auf vorteilhafte Weise kann hierdurch die Betriebssicherheit der Klimatisierungsvorrichtung erhöht werden, da Ausfälle von Klimatisierungsmodulen aufgrund von Vereisungen möglichst vermieden werden.

Gemäß einer Weiterentwicklung dieses Aspekt kann der Enteisungsmodus dabei einen Wechsel des Betriebsmodus mindestens eines vereisten Klimatisierungsmoduls vom ersten Betriebsmodus M₁ in den zweiten Betriebsmodus M₂, oder umgekehrt, umfassen. Durch den Wechsel des Betriebsmodus kann die Funktionen der Wärmeübertrager (Verdampfer und Kondensator) im Kältemittelkreislauf vertauscht werden, wodurch vorzugsweise ein Wärmeeintrag in den vormals als Verdampfer fungierenden und meist von einer Vereisung betroffenen Wärmeübertrager ermöglicht wird. Auf vorteilhafte Weise wird durch einfaches Umschalten der Ventileinrichtung ein leicht zu realisierender Enteisungsmodus bereitgestellt.

Nach einem weiteren Aspekt der Erfindung kann der Enteisungsmodus auch ein Aktivieren oder Deaktivieren mindestens eines vereisten Klimatisierungsmoduls umfassen. Als "Aktivieren" kann dabei im Allgemeinen der Übergang von einem betriebs- bzw. funktionslosen Zustand in einen aktiven Zustand, vorzugsweise in einen Betrieb des Klimatisierungsmoduls im ersten oder zweiten Betriebsmodus M₁ oder M₂, verstanden werden. Als "Deaktivieren" kann entsprechend ein Übergang von einem aktiven Zustand in einen betriebs- bzw. funktionslosen Zustand, insbesondere in einen Zustand, in dem das Klimatisierungsmodul eine Kälte- bzw. Heizleistung von 0 Watt erbringt, verstanden werden. Vorzugsweise kann der Enteisungsmodus dabei gerade im Fall von warmen Umgebungstemperaturen ein Deaktivieren mindestens eines vereisten Klimatisierungsmoduls umfassen. Auf vorteilhafte Weise kann dadurch ohne zusätzliche Kosten die Umgebungswärme zum Auftauen vereister Bereiche genutzt werden.

Zudem oder alternativ kann der Enteisungsmodus auch einen Betrieb mindestens eines vereisten Klimatisierungsmoduls in einem vom optimalen Betriebspunkt abweichenden und/oder ineffizienten Betriebspunkt umfassen. Der Betriebspunkt, der auch als Arbeitspunkt bezeichnet werden kann, kann dabei durch die Temperatur des Wärmequellenmediums, beispielweise Umgebungsluft im Betriebsmodus M₂, am Verdampfer und die Temperatur des Wärmesenkenmediums, beispielweise Luft des Fahrzeuginnenraums im Betriebsmodus M₂, am Kondensator angegeben werden. Der optimale Betriebspunkt ist dabei der Betriebspunkt mit dem höchsten Wirkungsgrad. Anders ausgedrückt kann in diesem Enteisungsmodus die Vereisung reduziert werden, indem die vom entsprechenden Klimatisierungsmodul erbrachten Heiz- bzw. Kühlleistung reduziert wird. Auf vorteilhafte Weise trägt gemäß diesem Aspekt auch ein Enteisungsmodus betriebenes Klimatisierungsmodul noch zur Innenraumklimatisierung bei.

Um möglichen Komforteinbußen für Passagiere im Fahrzeuginnenraum aufgrund einer reduzierten Heiz- bzw. Kühlleistung durch den Enteisungsbetrieb mancher Klimatisierungsmodule entgegenzuwirken, kann gemäß einem weiteren Aspekt die zentrale Steuereinrichtung ausgebildet sein, zur Leistungskompensation nicht vereiste Klimatisierungsmodule zu aktivieren. Hierzu können ein oder mehrere bislang inaktive Klimatisierungsmodule in den aktiven Zustand, vorzugsweise in einen Betrieb im ersten oder zweiten Betriebsmodus M₁ oder M₂, versetzt werden. Zudem oder alternativ kann die die zentrale Steuereinrichtung ausgebildet sein bereits aktivierte nicht vereiste Klimatisierungsmodule bei höherer Leistung zu betreiben. Der Ausdruck "höhere" Leistung bezieht sich dabei auf eine Leistung der zum Zeitpunkt des Einschaltens des Enteisungsmodus aktiven Klimatisierungsmodule. Zur Leistungskompensation kann dabei die Leistung sowohl nur eines als auch mehrerer aktiver Klimatisierungsmodule erhöht werden. Insgesamt kann somit der Verlust an Heiz- bzw. Kühlleistung aufgrund des Enteisungsbetriebs mancher Klimatisierungsmodule durch die übrigen Klimatisierungsmodule ausgeglichen werden. Auf vorteilhafte Weise werden damit Komforteinbußen aufgrund von Temperaturschwankungen für die Fahrgäste vermieden.

Nach einem weiteren Aspekt der Erfindung kann die mindestens eine Betriebsbedingung erfüllt sein, falls ein Teillastbetrieb vorliegt. Mit anderen Worten kann die Betriebsbedingung erfüllt sein, falls von der Klimatisierungsvorrichtung nicht ihre maximal erbringbare Leistungsabgabe angefordert wird. Dass ein Teillastbetrieb vorliegt, kann hierbei beispielsweise dadurch angezeigt werden, dass eine von der Klimatisierungsvorrichtung angeforderte, abgegebene und/oder aufgenommene gemessene Leistung einen bestimmten Schwellenwert unterschreitet. Ferner kann die zentrale Steuereinrichtung ausgebildet sein, zur Wirkungsgradoptimierung in einem Teillastbetrieb - vorzugsweise in Abhängigkeit einer aktuellen Leistungsanforderung - einen Teil der Klimatisierungsmodule zu deaktivieren, wobei die verbleibenden aktiven Klimatisierungsmodule mit einem im Vergleich zu einem Betrieb aller Klimatisierungsmodule höheren Wirkungsgrad betreibbar sind. Der Ausdruck "höhererWirkungsgrad" kann dabei sowohl umfassen, dass jedes der verbleibenden aktiven Klimatisierungsmodule jeweils einen höheren Wirkungsgrad als im entsprechenden Betrieb aller Klimatisierungsmodule aufweist, als auch dass trotz der Verschlechterung des Wirkungsgrads einzelner Klimatisierungsmodule der durchschnittliche Wirkungsrad der verbleibenden Klimatisierungsmodule erhöht wird. Mit anderen Worten kann die Steuereinrichtung ausgebildet sein, die Anzahl aktiver Klimatisierungsmodule in Abhängigkeit einer aktuellen Leistungsanforderung an die Klimatisierungsvorrichtung und den betriebspunktabhängigen Wirkungsgrad der einzelnen Klimatisierungsmodule zu optimieren. Dabei kann es bei der Festlegung der Anzahl der verbleiben aktiven Klimatisierungsmodule beispielsweise effizienter sein, anstelle eines Klimatisierungsmodul bei voller Leistung, zwei Klimatisierungsmodul bei halber Leistung zu betrieben. Dies kann z. B. daran liegen, dass bei reduzierter Leistung die Temperaturgradienten im Verdampfer und Kondensator geringer sein können, so dass die Wärmepumpe gegen einen geringeren Temperaturunterschied arbeiten muss, bzw. Strömungsverluste durch Reibung in den Leitungen verringert sein können. In diesem Zusammenhang kann die Steuereinrichtung ferner eingerichtet sein, auf z. B. in einem Speicher hinterlegte Informationen betreffend betriebspunktabhängige Kennzahlen und/oder Kennlinien der einzelnen Klimatisierungsmodule und/oder auf Messerwerte von Sensoreinrichtungen, wie beispielweise eine Außentemperatur und/oder aktuelle Innenraumtemperatur im Kraftfahrzeug, zurückzugreifen. Auf vorteilhafte Weise wird hierdurch ein energiesparendender und damit effizienter Betrieb der modularen Klimatisierungsvorrichtung ermöglicht.

Gemäß einem weiteren Aspekt der Erfindung kann die mindestens eine Betriebsbedingung erfüllt sein, falls ein Arbeitsstunden-Ungleichgewicht der Klimatisierungsmodule vorliegt. Hierzu kann die zentrale Steuereinrichtung ausgebildet sein, die Arbeitsstunden der einzelnen Klimatisierungsmodule zu protokolieren, wobei die Größe "Arbeitsstunden" die kumulierte aktive Betriebszeit der Klimatisierungsmodule beschreibt. Dass ein Arbeitsstunden-Ungleichgewicht vorliegt, kann hierbei beispielsweise dadurch angezeigt werden, dass eine oder mehrere Arbeitsstunden-Differenzen von zwei Klimatisierungsmodulen einen bestimmten Schwellenwert überschreiten. Ferner kann die zentrale Steuereinrichtung ausgebildet sein, in einem Teillastbetrieb einen Teil der Klimatisierungsmodule zu deaktivieren, wobei die deaktivierten Klimatisierungsmodule im Durchschnitt eine höhere Anzahl an Arbeitsstunden aufweisen als die aktiven Klimatisierungsmodule. Mit anderen Worten kann das arithmetische Mittel der Arbeitsstunden der aktiven Klimatisierungsmodule kleiner als das der deaktivierten, d. h. nicht aktiven, Klimatisierungsmodule sein. Auf vorteilhafte Weise kann dadurch die Betriebssicherheit der Klimatisierungsvorrichtung erhöht werden, da die einzelnen Klimatisierungsmodule möglichst gleichmäßig verschleißen.

Nach einer Weiterbildung dieses Aspekts kann die zentrale Steuereinrichtung ausgebildet sein, im Teillastbetrieb bevorzugt das Klimatisierungsmodul mit den meisten Arbeitsstunden - welche auch als Betriebsstunden bezeichnet werden können - zu deaktivieren. In anderen Worten kann die zentrale Steuereinrichtung ausgebildet sein, das Klimatisierungsmodul, das bei einem Vergleich der Arbeitsstunden aller Klimatisierungsmodule die meisten Arbeitsstunden aufweist, vorrangig zu deaktivieren. Zur Bestimmung der Arbeitsstunden kann jede geeignete Größe verwendet werden, die ein Maß für die bisherige Betriebsbelastung eines Klimatisierungsmoduls, seit dessen Inbetriebnahme, angibt. Weiterhin kann die zentrale Steuereinrichtung auch ausgebildet sein, das Klimatisierungsmodul mit den wenigsten Arbeitsstunden bevorzugt zu aktivieren. Zudem oder alternativ kann die zentrale Steuereinrichtung auch ausgebildet sein, Klimatisierungsmodule mit mehr Arbeitsstunden im Vergleich zu einem Arbeitsstundendurchschnitt aller Klimatisierungsmodulen bevorzugt zu deaktivieren und/oder Klimatisierungsmodule mit weniger Arbeitsstunden im Vergleich zu einem Arbeitsstundendurchschnitt aller Klimatisierungsmodulen bevorzugt zu aktivieren. All diese Vorschriften stellen auf vorteilhafte Weise sicher, dass die Arbeitsstunden möglichst gleichmäßig auf die einzelnen Klimatisierungsmodule verteilt werden, wodurch sich die Lebensdauer der einzelnen Module erhöht.

Weiterhin wird erfindungsgemäß ein Kraftfahrzeug, vorzugsweise Nutzfahrzeug, mit einer modularen Klimatisierungsvorrichtung wie in diesem Dokument beschrieben bereitgestellt. Hierdurch kann auf vorteilhafte Weise ein Kraftfahrzeug mit einer modularen und damit skalierbare, d. h. je nach Einsatzbereich, Fahrzeugtyp, und/oder Fahrgastzahl flexibel anpassbare, Klimatisierungsvorrichtung bereitgestellt, bei dem auch im Fall eines Defekts einzelner Module weiterhin eine ausreichende Klimatisierung des Kraftfahrzeugs sichergestellt werden kann.

Nach einem weiteren Aspekt kann dabei das Kraftfahrzeug ein, vorzugsweise elektrisch angetriebener, Omnibus mit im Dachbereich in Längsrichtung verteilt angeordneten Klimatisierungsmodulen sein. Ferner kann dabei die zentrale Steuereinrichtung ausgebildet sein, wahlweise alle oder einen Teil der Klimatisierungsmodule zu aktivieren, um wahlweise den gesamten Innenraum oder Teilbereiche zu klimatisieren. Dabei können die aktiven Klimatisierungsmodule alle dieselbe oder auch unterschiedliche aktuelle Heiz- und/oder Kühlleistungen aufweisen bzw. alle in demselben oder unterschiedlichen Betriebsmodi (z. B. Betriebsmodus M₁ oder M₂) betreiben werden. Mit anderen Worten kann ein Kraftfahrzeug mit einer zonalen Klimatisierung bereitgestellt werden.

Gemäß einem weiteren Aspekt der Erfindung kann das Kraftfahrzeug ferner mindestens eine ein- und ausfahrbare Trennwand zur Trennung Innenraums in verschiedene Innenraumbereiche, z. B. in einen vorderen und hinteren Fahrzeugteil, umfassen. Mit anderen Worten kann die Größe und/oder Aufteilung des nutzbaren Fahrgastraums dynamisch variiert werden. Hierbei kann jedem der Innenraumbereiche mindestens ein Klimatisierungsmodul zur Klimatisierung des jeweiligen Innenraumbereichs zugeordnet sein. Beispielweise kann so bei einer niedrigen Fahrgastzahl durch Ausfahren einer vorzugsweise in der Fahrzeugmitte angebrachte Trennwand, der nutzbare Fahrgastraum auf einen vorderen Innenraumbereich eingeschränkt werden, der mittels eines ersten Klimatisierungsmoduls klimatisiert wird. Auf eine Klimatisierung des abgetrennten, hinteren Innenraumbereichs kann verzichtet werden. D. h., ein zweites Klimatisierungsmodul, das dem hinteren Innenraumbereich zugeordnet ist, ist nicht aktiv. Erhöht sich das Fahrgastaufkommen, kann durch Einfahren der Trennwand der gesamte verfügbare Fahrzeuginnenraum zur Nutzung freigegeben werden, wobei dieser nun vom ersten und zweiten Klimatisierungsmodul klimatisiert wird. Auf vorteilhafte Weise kann so eine energiesparende zonale Klimatisierung eines Fahrzeuginnenraums bereitgestellt werden.

Ferner wird erfindungsgemäß ein Verfahren zur Vorkonfiguration einer modularen Klimatisierungsvorrichtung für ein Kraftfahrzeug, wie sie in diesem Dokument beschrieben wird, bereitgestellt. Vorzugsweise ist die modulare Klimatisierungsvorrichtung dabei eine modulare Klimatisierungsvorrichtung für ein elektrisch angetriebenes Kraftfahrzeug. Das Verfahren umfasst zunächst das Festlegen einer Art und/oder Anzahl der am Kraftfahrzeug zu montierenden Klimatisierungsmodule in Abhängigkeit eines Einsatzgebiets und/oder Nennleistungsbedarfs des Kraftfahrzeugs. Bei dem Einsatzgebiet kann es sich beispielsweise um ein Heißland oder Kaltland handeln, für die jeweils ein bestimmter Nennleistungsbedarf zur Klimatisierung definiert ist. Anschließend erfolgt ein Montieren der festgelegten Art und/oder Anzahl der Klimatisierungsmodule am Kraftfahrzeug. Diesen Zusammenhang kann unter dem Ausdruck "Vorkonfiguration" die Anordnung und Zusammenstellung der modularen Klimatisierungsvorrichtung vor deren geplante Inbetriebnahme verstanden werden. Dies umfasst dabei auch Umbaumaßnahmen im Rahmen einer Änderung des Einsatzgebiets, beispielsweise bei einer Verlegung des Kraftfahrzeugs von einem Heiß- in ein Kaltland. Auf vorteilhafte Weise wird dadurch eine Möglichkeit zum dynamischen Anpassen der Klimatisierungsvorrichtung an unterschiedliche Einsatzgebiete bereitgestellt.

Nach einer Weiterbildung dieses Aspekts können, falls das Einsatzgebiet ein Heißland ist, mehr Klimatisierungsmodule montiert werden, als im Fall, dass das Einsatzgebiet kein Heißland ist. Zudem oder alternativ können auch, falls das Einsatzgebiet ein Kaltland ist, mehr Klimatisierungsmodule montiert werden, als im Fall, dass das Einsatzgebiet kein Kaltland ist. Als "Heißland" kann dabei ein Gebiet mit im Vergleich zum europäischen Raum erhöhten Außentemperaturen (z. B. Arabische Emirate) bezeichnet werden, während der Begriff "Kaltland" ein Gebiet im Vergleich zum mitteleuropäischen Raum erniedrigten Außentemperaturen (z. B. Island) angeben kann. So kann beispielsweise für einen Stadtbus in München (mittlere Heiz-und Kühlanforderungen) eine Klimatisierungsvorrichtung mit drei Klimatisierungsmodulen, für einen Stadtbus in Granada (hohe Kühlanforderungen) eine Klimatisierungsvorrichtung mit vier Klimatisierungsmodulen und für einen Stadtbus in Stockholm eine Klimatisierungsvorrichtung mit fünf Klimatisierungsmodulen (hohe Heizanforderungen) festgelegt werden. Auf vorteilhafte Weise kann so die Anzahl der Module auf die jeweiligen klimatischen Bedingungen hin angepasst werden.

Gemäß einem weiteren Aspekt kann der Schritt des Festlegens einer Art und/oder Anzahl der am Kraftfahrzeug zu montierenden Klimatisierungsmodule auch in Abhängigkeit des Fahrzeugtyps und/oder der Fahrzeuggröße erfolgen. Beispielsweise kann für einen Transporter oder einen Lastkraftwagen ein Modul ausreichend sein, während für einen Transporter oder einen Lastkraftwagen mit Kühlkabine mehrere Module vorgesehen werden. Des Weiteren können einen Stadtbus drei, an einem Reisebus vier und an einem Gelenksbus fünf Klimatisierungsmodule verbaut sein während bei Bussen ohne Klimatisierung des Fahrgastraums ein Modul ausreichend ist. Auf vorteilhafte Weise kann dadurch eine effiziente und bedarfsgerechte Klimatisierungsvorrichtung bereitgestellt werden.

Zusätzlich zu den bisher beschriebenen Aspekten werden im Folgenden weitere optionale Aspekte diskutiert. Diese betreffen dabei sowohl die konstruktive Ausgestaltung der modularen Klimatisierungsvorrichtung selbst sowie das Kraftfahrzeug mit einer entsprechenden modularen Klimatisierungsvorrichtung.

Nach einem weiteren Aspekt kann der, vorzugsweise elektrisch angetriebene, Verdichter mindestens eines Klimatisierungsmoduls ein Hochspannungskompressor sein, der vorzugsweise mit einer Spannung zwischen 250-800 V betrieben wird. Mit anderen Worten kann der Verdichter, welcher auch als Kompressor bezeichnet werden kann und zur Verdichtung des Kältemittels dient, ausgebildet sein, zum ordnungsgemäßen Betrieb mindestens eine Spannung von 250 V zu benötigen. Dabei kann der Verdichter bzw. der Hochspannungskompressor beispielweise in Form eines Rollkolbens, eines Scrollverdichters, eines Hubkolbenverdichters, eines Schraubenverdichters und/oder eines Turboverdichters ausgebildet sein. Auf vorteilhafte Weise wird dadurch sichergestellt, dass das Klimatisierungsmodul auch im Fall großvolumiger Fahrzeuginnenräume (z. B. Omnibus) eine ausreichende Kühl- bzw. Heizleistung erbringen kann.

Um eine Klimatisierungsvorrichtung mit einer hohen Betriebssicherheit für mögliche Fahrzeuginsassen bereitzustellen, kann gemäß einem weiteren Aspekt der Erfindung der zweite Wärmeübertrager mindestens eines Klimatisierungsmoduls ein Kühlmittel/Kältemittel-Wärmeübertrager, vorzugsweise in Form eines Plattenwärmeübertragers, sein. Als Wärmeübertrager wird hierbei - wie auch im gesamten Dokument - ein Apparat verstanden, der Wärme von einem Medium auf ein anderes und umgekehrt übertragen kann. Im vorliegenden Fall handelt es sich bei dem ersten Medium um ein Kühlmittel, beispielsweise Wasser, und bei dem zweiten Medium um ein Kältemittel, beispielsweise CO₂. Als Kühl- bzw. Kältemittel werden dabei gasförmige, flüssige oder feste Stoffe oder Stoffgemische verstanden, die zum Abtransport von Wärme eingesetzt werden können. Der Unterschied zwischen Kühl- und Kältemittel ist, dass Kältemittel in einem Kältezyklus auch Wärme entgegen einem Temperaturgradienten übertragen können, während Kühlmittel lediglich in der Lage sind, in einem Kühlzyklus die Entropie entlang des Temperaturgradienten zu einer Stelle niedrigerer Temperatur zu transportieren. Weiterhin kann der zweite Wärmeübertrager in Verbindung mit einem Kühlmittelkreislauf stehen, der im Folgenden zur besseren Unterscheidung als erster Kühlmittelkreislauf bezeichnet werden soll. Dieser erste Kühlmittelkreislauf kann ferner eine, als erste Pumpe bezeichnete, Pumpe zur Förderung von Kühlmittel sowie einen dritten Wärmeübertrager, vorzugsweise einen Luft/Kühlmittel-Wärmeübertrager, zum Wärmeaustausch mit dem Fahrzeuginnenraum umfassen. Zur Regulierung des Luftstroms in den Fahrzeuginnenraum kann ferner auch ein Ventilator am dritten Wärmeübertrager angeordnet sein. Hierbei ist anzumerken, dass die gesamten im Dokument verwendeten Ordnungszahlwörter (erster, zweiter, dritter etc.) lediglich zur besseren Unterscheidung der einzelnen Komponenten dienen und nicht derart zu verstehen sind, dass tatsächlich auch eine entsprechende Anzahl der Komponenten in der Vorrichtung vorhanden ist. Auf vorteilhafte Weise kann gemäß diesem Aspekt der Erfindung das Heizen bzw. Kühlen des Fahrzeuginnenraums nicht durch unmittelbaren Wärmeaustausch zwischen dem Kältemittelkreislauf und dem Fahrzeuginnenraum, sondern über einen mittelbaren Wärmeaustausch über den ersten Kühlmittelkreislauf erfolgen. Dadurch kann die Betriebssicherheit erhöht werden, da ein Eintrag von oftmals gefährlichem Kältemittel (z. B. CO₂) den Fahrgastraum - beispielweise im Fall einer Leckage - minimiert werden kann, da der Kältemittelkreislauf nicht in direktem Kontakt mit einem Fahrzeuginnenraum, insbesondere nicht mit einen Fahrerarbeitsplatz, steht.

Nach einem weiteren Aspekt kann der Kältemittelkreislauf mindestens eines Klimatisierungsmoduls einen vierten Wärmeübertrager, der vorzugsweise als Kühlmittel/Kältemittel-Wärmeübertrager ausgebildet ist, umfassen. Dieser kann im ersten Betriebsmodus M₁ parallel zum zweiten Wärmeübertrager und im zweiten Betriebsmodus M₂ parallel zum ersten Wärmeübertrager im Kältemittelkreislauf geschaltet sein. Dabei kann der vierte Wärmeübertrager in Verbindung mit einem zweiten Kühlmittelkreislauf stehen, der vorzugsweise zur Kühlung eines elektrischen Energiespeichers und/oder einer elektrischen Maschine ausgebildet ist. Zudem oder alternativ kann der zweite Kühlmittelkreislauf auch zur Kühlung einer Frontbox, einer Leistungselektronik und/oder eines elektrischen Umformers ausgebildet sein. Zu diesem Zweck kann der zweiten Kühlmittelkreislauf ferner eine, als zweite Pumpe bezeichnete, Pumpe zur Zirkulation des Kühlmittels, beispielsweise Wasser, umfassen und/oder thermisch mit einer elektrischen Maschine und/oder einem elektrischen Energiespeicher, vorzugsweise über eine Kühlplatte, gekoppelt sein. Zudem oder alternativ kann das Kühlmittel des zweiten Kühlmittelkreislaufs dabei auch zumindest einen Teil einer elektrischen Maschine und/oder eines elektrischen Energiespeichers um- und/oder durchströmen. Auf vorteilhafte Weise wird dadurch einerseits eine Kühlung eines elektrischen Energiespeichers einer elektrischen Maschine, einer Leistungselektronik und/oder eines elektrischen Umformers eines Kraftfahrzeugs erreicht, während gleichzeitig die Abwärme dieser Komponenten zur Fahrzeuginnenraumheizung verwendet werden kann.

Gemäß einem weiteren Aspekt kann der Kältemittelkreislauf mindestens eines Klimatisierungsmoduls einen fünften Wärmeübertrager umfassen, der sowohl im ersten Betriebsmodus M₁ als auch zweiten Betriebsmodus M₂ in Serie zum ersten und zweiten Wärmeübertrager im Kältemittelkreislauf geschaltet ist. Mit anderen Worten durchströmt das Kältemittel des Kältemittelkreislaufs sowohl im ersten als auch zweiten Betriebsmodus M₁ und M₂ nacheinander jeweils den ersten, zweiten und fünften Wärmeübertrager, wobei die Reihenfolge der Durchströmung je nach Betriebsmodus variieren kann. Mittels des fünften Wärmeübertragers kann der Einsatzbereich des entsprechenden Klimatisierungsmoduls erweitert werden, da weitere vorteilhafte Funktionen des Kältemittelkreislaufs realisiert werden können, auf die im Folgenden detaillierter eingegangen wird.

Beispielsweise kann nach einem weiteren Aspekt der fünfte Wärmeübertrager ein Luft/Kältemittel-Wärmeübertrager, vorzugsweise in Form eines Rippenrohrs und/oder eines Microchannel-Wärmeübertragers, sein, der thermisch an eine Luftleitung zum Wärmeaustausch mit dem Fahrzeuginnenraum gekoppelt sein kann. Zudem oder alternativ kann der fünfte Wärmeübertrager thermisch auch an einen in den Fahrgastraum strömenden Luftstrom gekoppelt sein. Im Speziellen kann der fünfte Wärmeübertrager thermisch an einen Luftstrom gekoppelt sein, die zuvor bereits im thermischen Kontakt mit dem zweiten Wärmeübertrager stand. D. h., ein Luftstrom kann zunächst Wärme mit dem zweiten Wärmeübertrager und anschließend Wärme mit dem fünften Wärmeübertrager austauschen, bevor er in den Fahrgastraum strömt. Auf vorteilhafte Weise ermöglicht dieser Aspekt der Erfindung eine Entfeuchtung der in den Fahrzeuginnenraum strömenden Luft.

Alternativ kann der fünfte Wärmeübertrager auch ein Kühlmittel/Kältemittel-Wärmeübertrager, vorzugsweise in Form eines Plattenwärmeübertragers, sein, der in Verbindung mit einem, als dritter Kühlmittelkreislauf bezeichneten, Kühlmittelkreislauf stehen kann. Hierbei kann als Kühlmittel im dritten Kühlmittelkreislauf - wie auf für alle anderen Kühlmittelkreisläufe im gesamten Dokument - ein wasserbasiertes Kühlmittel verwendet werden.

Gemäß einer Weiterbildung dieses Aspekts kann der dritte Kühlmittelkreislauf hierbei zusätzlich eine dritte Pumpe, einen sechsten Wärmeübertrager, vorzugsweise einen Luft/Kältemittel-Wärmeübertrager, und/oder einen siebten Wärmeübertrager, vorzugsweise einen Kühlmittel/Kältemittel-Wärmeübertrager, zum Wärmeaustausch mit dem Fahrzeuginnenraum umfassen. Weiterhin kann der dritte Kühlmittelkreislauf ein oder mehrere Ventile umfassen, durch die verschiedene Strömungspfade im dritten Kühlmittelkreislauf realisiert werden können. Ferner kann im Bereich des sechsten Wärmeübertragers ein Ventilator zur Regulierung des Luftstroms angeordnet sein. Während der siebte Wärmeübertrager zur Entfeuchtung des zum Fahrgastraum strömenden Luftstroms dienen kann, ermöglicht der sechste Wärmeübertrager auf vorteilhafte Weise eine weitere, d. h. räumlich vom siebten Wärmeübertrager getrennte, Wärmeeinbringung in den Fahrgastraum. Durch das räumlich versetzte Einströmen in den Fahrgastraum kann auf vorteilhafte Weise einer vertikalen Luftschichtung entgegengewirkt werden.

Nach einem weiteren Aspekt kann der Kältemittelkreislauf mindestens eines Klimatisierungsmoduls thermisch direkt an einen elektrischen Energiespeicher, vorzugsweise eine Traktionsbatterie, gekoppelt sein. Zudem oder alternativ kann der Kältemittelkreislauf mindestens eines Klimatisierungsmoduls thermisch auch direkt an eine elektrische Maschine gekoppelt sein. Eine direkte Kopplung bedeutet dabei, dass der Kältemittelkreislauf auch unmittelbar, d. h. ohne zwischengeschalteten Kühlmittelkreislauf, Wärme an eine elektrischen Maschine und/oder einen elektrischen Energiespeicher abgeben bzw. Wärme von diesen Komponenten aufnehmen kann. Vorzugsweise um- und/oder durchströmt hierzu das Kältemittel des Kältemittelkreislaufs auch zumindest einen Teil einer elektrischen Maschine und/oder eines elektrischen Energiespeichers. Auf vorteilhaft Weise kann dadurch eine kostengünstige Kühlung eines elektrischen Energiespeichers bzw. einer elektrischen Maschine erreicht werden, da die Komponenten für einen Kühlmittelkreislauf (Pumpen, Wärmetauscher etc.) eingespart werden können. Ferner kann auf vorteilhafte Weise eine Kühlung der Zellen einer Batterie bei gleicher Temperatur realisiert werden, da das Kältemittel bei seinem Phasenübergang vom flüssigen in den gasförmigen Zustand zwar Wärme aufnimmt, jedoch seine Temperatur nicht ändert.

Gemäß einem weiteren Aspekt kann mindestens eines der Klimatisierungsmodule mindestens eine Luftklappe und/oder mindestens einen Ventilator umfassen. Der Ventilator, der in diesem Zusammenhang auch als Gebläse, Lüfter und/oder Strömungsmaschine bezeichnet werden kann, kann dabei - beispielweise mittels eines rotierenden Laufrads - Luft fördern von und/oder zum jeweiligen Klimatisierungsmodul fördern. Hierbei kann die Steuereinrichtung ferner ausgebildet sein, die von dem jeweiligen Klimatisierungsmodul geförderte Luftmenge, beispielweise durch Erhöhung/Reduzierung einer Drehzahl des Ventilators, zusteuern. Vorzugsweise erfolgt dies dabei unabhängig von der Betriebsweise der weiteren Klimatisierungsmodule. Auf vorteilhafte Weise wird dadurch nicht nur eine flexibler einstellbare Klimatisierung eines Fahrgastraums erreicht.

Nach einem weiteren Aspekt kann der Kältemittelkreislauf mindestens eines Klimatisierungsmoduls CO₂ und/oder Propan als Kältemittel verwenden. Ohne den Bereich der Erfindung zu verlassen können jedoch auch andere - dem Fachmann bekannte - Kältemittel, darunter R134a, R1234yf und/oder deren Mischung R513a, verwendet werden. Der Vorteil der Verwendung von CO₂ liegt hierbei darin, dass CO₂ weder giftig, explosiv noch brennbar ist sowie alle aktuellen Umweltanforderungen erfüllt. Zudem oder alternativ kann der Kältemittelkreislauf mindestens eines Klimatisierungsmoduls auch einen Sammler zum Sammeln von Kältemittel, vorzugsweise als Pufferspeicher für Kältemittel, umfassen. Ferner kann der Sammler auch zur Trennung von gasförmigen und flüssigen Kältemittel bzw. zum Abscheiden von Öl am Boden des Sammlers ausgebildet sein. In diesem Zusammenhang kann der Sammler somit auch als Abscheider bezeichnet werden. Auf vorteilhafte Weise kann so sichergestellt werden, dass möglichst nur gasförmiges Kältemittel in den Verdichter gelangt, da Flüssigkeiten hier Schäden verursachen könnten. Zudem oder alternativ kann der Kältemittelkreislauf mindestens eines Klimatisierungsmoduls auch einen Zusatzkühler umfassen, der einen Bereich des Kältemittelkreislaufs zwischen der Drosseleinrichtung und ersten Wärmeübertrager mit einem Bereich des Kältemittelkreislaufs vor dem Eingang des Verdichters thermisch koppelt. Der Zusatzkühler kann somit auch als innerer Wärmeübertrager bezeichnet werden, weil er Wärme innerhalb des Kältemittelkreislaufs überträgt. Bevorzugt wird der Zusatzkühler dabei mittels eines Wärmeübertragers realisiert, jedoch können auch andere Formen der Wärmekopplung verwendet werden ohne den Bereich der Erfindung zu verlassen. Auf vorteilhafte Weise ermöglicht der Zusatzkühler die Wirksamkeit des Kreisprozesses zu erhöhen.

Nach einem weiteren Aspekt kann das Kraftfahrzeug dabei ein Elektrofahrzeug, vorzugsweise ein elektrischer Omnibus, sein. Mit anderen Worten kann der Antrieb des Kraftfahrzeugs ausschließlich mittels einer elektrischen Maschine (Elektromotor) erfolgen. Da bei derartigen Fahrzeugen keine Abwärme eines Verbrennungsmotors zur Beheizung des Fahrgastraums zur Verfügung steht, wird durch die vorliegende Erfindung gerade für Elektrofahrzeuge auf vorteilhafte Weise eine zuverlässige Klimatisierung des Innenraums ermöglicht. Alternativ kann es sich bei dem Kraftfahrzeug allerdings auch um ein verbrennungsmotorisch-betriebenes Kraftfahrzeug oder Hybrid-Kraftfahrzeug handeln. Weiterhin kann zudem oder alternativ mindestens eines der Klimatisierungsmodule im Bereich des Daches des Kraftfahrzeugs angeordnet sein. Besonders bevorzugt sind dabei alle der Klimatisierungsmodule im Bereich des Daches und/oder auf dem Dach des Kraftfahrzeugs angeordnet. Auf vorteilhafte Weise wird dadurch eine platzsparende und einfach zu wartende Montage der modularen Klimatisierungsvorrichtung ermöglicht.

Gemäß einem weiteren Aspekt der Erfindung kann zur zonalen Klimatisierung des Fahrzeuginnenraums jedes der Klimatisierungsmodule einem Klimatisierungsbereich des Fahrzeuginnenraums zugeordnet sein. Als Klimatisierungsbereich, der auch als Klimazone bezeichnet werden kann, soll dabei ein Bereich des Innenraums des Kraftfahrzeugs verstanden werden, der mittels einem diesem Bereich zugeordneten Klimatisierungsmodul möglichst unabhängig von weiteren Bereichen des Fahrzeuginnenraums gekühlt bzw. beheizt werden kann. Nach diesem Aspekt können so gezielt Klimatisierungsbereiche bzw. Klimazonen eines Innenraums, in denen sich Menschen aufhalten, klimatisiert werden während momentan nicht genutzte Klimatisierungsbereiche, nicht klimatisiert werden. Beispielweise kann so im Falle eines Omnibusses auf Betriebsfahrt, d. h. in einer Situation in der sich lediglich der Busfahrer im Fahrzeuginnenraum aufhält, nur ein Klimatisierungsbereich um den Fahrer klimatisiert werden, während im Heckbereich des Kraftfahrzeugs liegende Klimatisierungsbereich nicht aktiv klimatisiert werden. Auch kann gemäß diesem Aspekt - bei entsprechender Anordnung der Klimatisierungsmodule - eine an das individuelle Komfortempfinden angepasste Klimatisierung (Fahrer, Beifahrer, etc.) des Innenraums erreicht werden. Auf vorteilhafte Weise wird dadurch ein Kraftfahrzeug mit einer je nach Fahrgastaufkommen bzw. Komfortempfinden flexibel anpassbare Klimatisierungsvorrichtung bereitgestellt.

Nach einer Weiterbildung dieses Aspekts kann die zentrale Steuereinrichtung ausgebildet sein, entsprechend einer Maßgabe einen Teil der Klimatisierungsmodule zu aktivieren und/oder einen Teil der Klimatisierungsmodule zu deaktivieren. Die Maßgabe, welche auch als Vorgabe bezeichnet werden kann, kann hierbei vom Benutzer vorgegeben werden, beispielsweise in dem bestimmte zu aktivierende bzw. deaktivierende Klimatisierungsmodule über eine Eingabevorrichtung ausgewählt werden. Ferner kann die Maßgabe auch ein Einsatzbereich, eine Fahrgastzahl und/oder eine räumlich Verteilung von Fahrgästen im Fahrzeuginnenraum sein. Zudem oder alternativ kann die zentrale Steuereinrichtung auch ausgebildet sein, entsprechend einer Maßgabe einen Teil der Klimatisierungsmodule im ersten Betriebsmodus M₁ und/oder einen Teil der Klimatisierungsmodule im zweiten Betriebsmodus M₂ zu betreiben. Auf vorteilhafte Weise kann dadurch eine optimale Nutzung der vorhandenen Module je nach Anforderung ermöglicht.

Weitere Einzelheiten und Vorteile der Erfindung werden im Folgenden unter Bezugnahme auf die beigefügten Zeichnungen beschrieben. Es zeigen:
- Figur 1:: eine modulare Klimatisierungsvorrichtung für ein Kraftfahrzeug gemäß einer Ausführungsform der Erfindung;
- Figur 2:: einen schematischen Schaltplan eines Kältemittelkreislaufs eines Klimatisierungsmoduls nach einer ersten Ausführungsform der Erfindung;
- Figur 3:: einen schematischen Schaltplan eines Kältemittelkreislaufs eines Klimatisierungsmoduls nach einer zweiten Ausführungsform der Erfindung;
- Figur 4:: einen schematischen Schaltplan eines Kältemittelkreislaufs eines Klimatisierungsmoduls nach einer dritten Ausführungsform der Erfindung;
- Figur 5:: einen schematischen Schaltplan eines Kältemittelkreislaufs eines Klimatisierungsmoduls nach einer vierten Ausführungsform der Erfindung;
- Figur 6:: Kältemittelpfade im ersten und zweiten Betriebsmodus für die in Figur 5 gezeigte vierte Ausführungsform der Erfindung;
- Figur 7:: einen schematischen Schaltplan eines Kältemittelkreislaufs eines Klimatisierungsmoduls nach einer fünften Ausführungsform der Erfindung;
- Figur 8:: Kältemittelpfade im ersten und zweiten Betriebsmodus für die in Figur 7 gezeigte fünfte Ausführungsform der Erfindung;
- Figur 9:: einen schematischen Schaltplan eines Kältemittelkreislaufs eines Klimatisierungsmoduls nach einer sechsten Ausführungsform der Erfindung;
- Figur 10:: Kältemittelpfade im ersten und zweiten Betriebsmodus für die in Figur 9 gezeigte sechste Ausführungsform der Erfindung;
- Figur 11:: eine Legende zu den in Figuren 1-10 gezeigten Kältemittelkreisläufen;
- Figur 12:: eine schematische Darstellung eines Kraftfahrzeugs mit einer modulare gemäß einer Ausführungsform der Erfindung;
- Figur 13:: ein exemplarischer Betriebszustand einer modularen Klimatisierungsvorrichtung für ein Kraftfahrzeug gemäß der in Figur 1 gezeigten Ausführungsform der Erfindung;
- Figur 14:: ein exemplarischer zeitlicher Verlauf von Betriebszuständen einer modularen Klimatisierungsvorrichtung für ein Kraftfahrzeug gemäß der in Figur 1 einer Ausführungsform der Erfindung; und
- Figur 15: ein Flussdiagramm eines Verfahrens zur Vorkonfiguration einer modularen Klimatisierungsvorrichtung für ein Kraftfahrzeug gemäß einer Ausführungsform der Erfindung;

Gleiche oder funktional äquivalente Elemente sind dabei in allen Figuren mit denselben Bezugszeichen beschrieben und zum Teil nicht gesondert beschrieben.

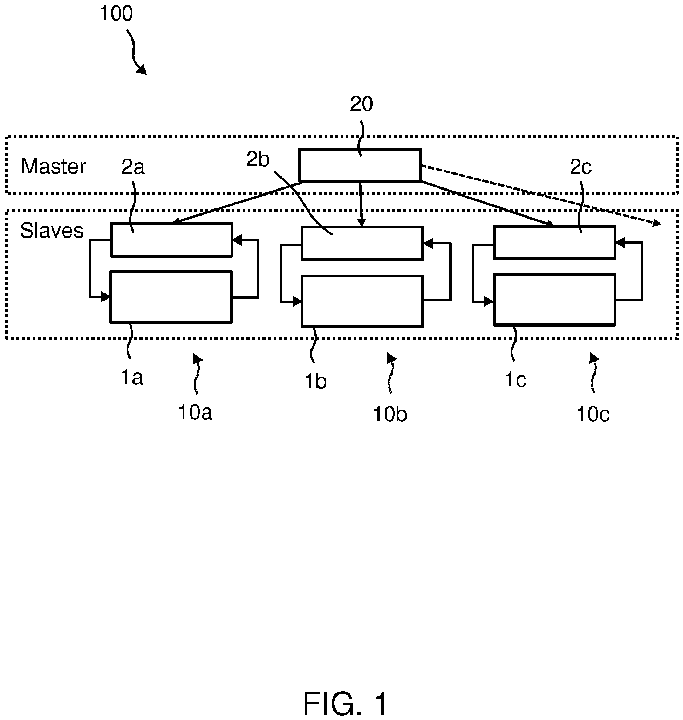

Figur 1 zeigt eine modulare Klimatisierungsvorrichtung 100 für ein Kraftfahrzeug 30 gemäß einer Ausführungsform der Erfindung. Die Klimatisierungsvorrichtung 100 umfasst dabei mindestens zwei - in der vorliegenden Ausführungsform drei - Klimatisierungsmodule 10a, 10b, 10c, die jeweils einen Kältemittelkreislauf 1a, 1b, 1c und eine Modulsteuereinrichtung 2a, 2b, 2c umfassen. Jede der Modul-Steuereinrichtungen 2a, 2b, 2c kann durch Ansteuerung der im Folgenden noch eingehender beschriebenen Komponenten ihres zugeordneten Kältemittelkreislaufs 1a, 1b, 1c die von den einzelnen Klimatisierungsmodulen 10a, 10b, 10c aufgenommene und/oder abgegebene Wärmemenge regeln. Weiterhin steht jede der Modulsteuereinrichtungen 2a, 2b, 2c jeweils mit einer übergeordneten zentralen Steuereinrichtung 20 Verbindung. Diese kann vorliegend sowohl Steuerbefehle an die einzelnen Modul-Steuereinrichtungen 2a, 2b, 2c senden, als von diesen Informationen betreffend das jeweilige Klimatisierungsmodul 10a, 10b, 10c empfangen. Zur Kommunikation zwischen zentrale Steuereinrichtung 20 und den einzelnen Modulsteuereinrichtungen 2a, 2b, 2c kann die Klimatisierungsvorrichtung 100 ferner auch geeignete Datenleitungen, beispielsweise in Form von CAN- und/oder LIN-Busleitungen, umfassen. Weiterhin ist die zentrale Steuereinrichtung 20 ausgebildet, in Abhängigkeit mindestens einer überwachten Betriebsbedingung eine Anzahl aktiver Klimatisierungsmodule 10a, 10b, 10c festzulegen und festzulegen, ob ein aktives Klimatisierungsmodul 10a, 10b, 10c im ersten oder zweiten Betriebsmodus M₁ oder M₂ betrieben wird. Dabei kann der Betriebsmodus (nicht aktiv, erster Betriebsmodus M₁, zweiter Betriebsmodus M₂) eines jeden Klimatisierungsmoduls 10a, 10b, 10c unabhängig voneinander festgelegt werden. Ferner können die Klimatisierungsmoduls 10a, 10b, 10c zudem auch wahlweise in weiteren Betriebsmodi betreibbar sein bzw. betrieben werden, ohne den Bereich der Erfindung zu verlassen.

Erfindungsgemäß wird somit eine modulare Klimatisierungsvorrichtung 100 bereitgestellt, bei der die einzelnen Klimatisierungsmodule 10a, 10b, 10c gleichzeitig unterschiedliche Funktionen ausführen können, bzw. die Anzahl der betriebenen Klimatisierungsmodule 10a, 10b, 10c variabel eingestellt werden kann. Weiterhin kann auch die von einem einzelnen Klimatisierungsmodul 10a, 10b, 10c abgegebene bzw. aufgenommene Wärmemenge unabhängig von den anderen Modulen festgelegt werden, wobei dies von der zentralen Steuereinrichtung 20 koordiniert wird. In diesem Zusammenhang kann somit auch von einem Master-Slave-System gesprochen werden, wobei die zentrale Steuereinrichtung 20 als Master-Einheit und die Klimatisierungsmodule 10a, 10b, 10c als Slave-Einheiten bezeichnet werden können, die Steuerbefehle von der zentrale Steuereinrichtung 20 erhalten. In diesem Zusammenhang ist es für den Fachmann auch offensichtlich, dass die eben beschriebene Klimatisierungsvorrichtung 100 nicht auf drei Klimatisierungsmodule 10a, 10b, 10c beschränkt ist, sondern auch beliebig viele weitere Module umfassen kann, ohne den Bereich der Erfindung zu verlassen. Auf vorteilhafte Weise wird vorliegend eine modulare und damit skalierbare bzw. je nach Einsatzbereich und/oder Kraftfahrzeug flexibel anpassbare Klimatisierungsvorrichtung 100 bereitgestellt.

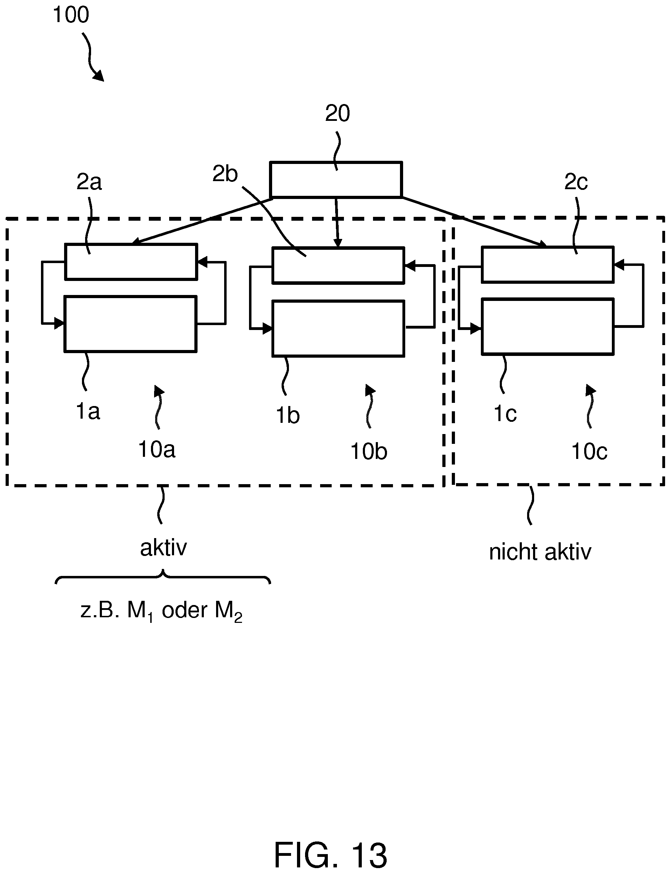

Bevor konstruktive Aspekte der modularen Klimatisierungsvorrichtung 100 und dabei insbesondere Ausführungsformen der Kühlkreisläufe 1a, 1b, 1c diskutiert werden, soll im Folgenden zunächst auf Details betreffend die Betriebsweise der Klimatisierungsvorrichtung 100 eingegangen werden. Figur 13 zeigt hierzu einen exemplarischen Betriebszustand einer modularen Klimatisierungsvorrichtung 100 für ein Kraftfahrzeug 30 gemäß der zuvor beschriebenen Ausführungsform der Erfindung. Wie vorstehend erwähnt, ist ein Grundgedanken der Erfindung hierbei, dass die einzelnen Klimatisierungsmodule 10a, 10b, 10c gleichzeitig unterschiedliche Funktionen ausführen können, bzw. die Anzahl der aktiven, d. h. betriebenen, Klimatisierungsmodule 10a, 10b, 10c variabel eingestellt werden kann. Entsprechend kann somit eine Teilmenge aller Klimatisierungsmodule 10a, 10b, 10c beispielsweise im ersten Betriebsmodus M₁ und eine andere Teilmenge aller Klimatisierungsmodule 10a, 10b, 10c im zweiten Betriebsmodus M₂ vorliegen. Weiterhin kann, wie durch die gestrichelten Linien in Figur 13 veranschaulicht, auch eine Teilmenge aller Klimatisierungsmodule 10a, 10b, 10c - vorliegend die Klimatisierungsmodule 10a und 10b - aktiv sein, während eine andere Teilmengen aller Klimatisierungsmodule 10a, 10b, 10c - vorliegend das Klimatisierungsmodule 10c - nicht aktiv (deaktiviert) ist.

Ein derartiger Zustand der Klimatisierungsmodule 10a, 10b, 10c resultiert hierbei daraus, dass erfindungsgemäß die zentrale Steuereinrichtung 20 ausgebildet ist, in Abhängigkeit mindestens einer überwachten Betriebsbedingung eine Anzahl aktiver Klimatisierungsmodule 10a, 10b festzulegen und/oderfestzulegen, ob ein aktives Klimatisierungsmodul 10a, 10b im ersten oder zweiten Betriebsmodus M₁ oder M₂ betrieben wird. Die überwachte Betriebsbedingung kann dabei erfüllt sein, falls eines der Klimatisierungsmodule 10a, 10b, 10c - vorliegend z. B. Klimatisierungsmoduls 10c - deutlich mehr kumulierte Arbeitsstunden als die übrigen Klimatisierungsmodule 10a und 10b aufweist. In diesem Fall kann die Steuereinrichtung 20 eingerichtet sein, zum Angleichen der Arbeitsstunden in einem Teillastbetrieb bevorzugt Klimatisierungsmodule mit vielen Arbeitsstunden zu deaktivieren. Als Teillastbetrieb kann dabei eine Betriebssituation verstanden werden, in der zur Erfüllung einer vorgegebenen Leistungsanforderung nicht alle Klimatisierungsmodule 10a, 10b, 10c bzw. die volle Leistung aller vorhandenen Klimatisierungsmodule 10a, 10b, 10c benötigt wird. Beispielsweise kann im vorliegenden Fall die Leistungsanforderungen allein durch einen Betrieb der Klimatisierungsmodule 10a und 10b erfüllt werden, wobei die aktiven Klimatisierungsmodule 10a und 10b sowohl beide im ersten oder zweiten Betriebsmodus, oder aber auch jeweils in unterschiedlichen Betriebsmodi betreiben werden können. Auf vorteilhafte Weise können hierdurch die Arbeitsstunden möglichst gleichmäßig auf die einzelnen Klimatisierungsmodule 10a, 10b, 10c verteilt werden, wodurch sich die Lebensdauer der einzelnen Klimatisierungsmodule 10a, 10b, 10c erhöht.

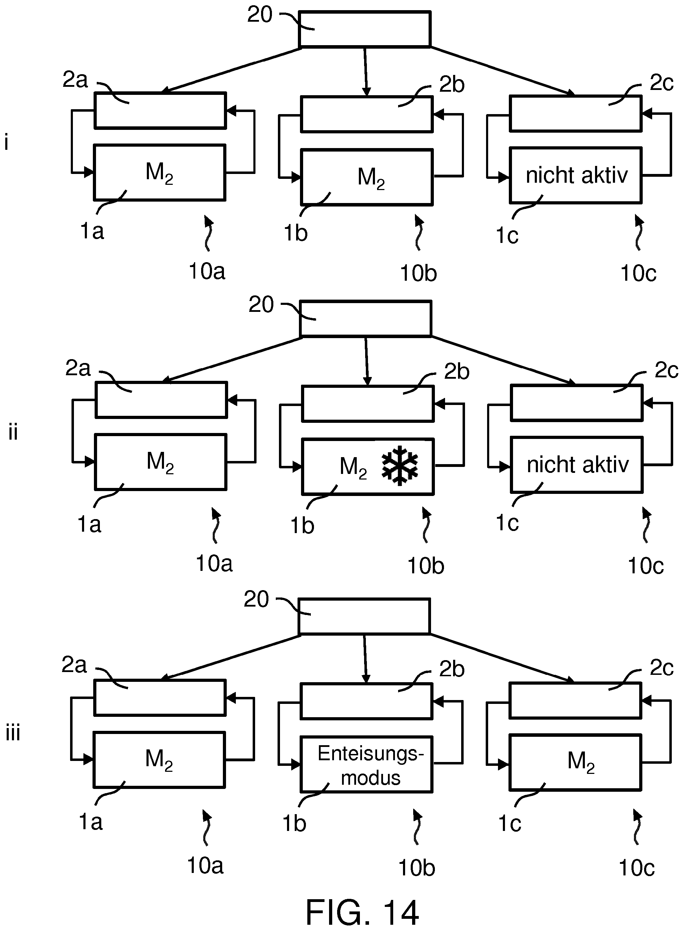

Neben der Situation, dass ein Arbeitsstunden-Unterschied vorliegt, kann die mindestens eine überwachte Betriebsbedingung auch anderweitig erfüllt sein, beispielsweise falls eine Vereisung mindestens eines Klimatisierungsmoduls 10a, 10b, 10c und/oder falls ein Teillastbetrieb vorliegt. Auf den Aspekt der Vereisung soll nun mit Bezug auf Figur 14 näher eingegangen werden. Figur 14 zeigt hierzu exemplarisch den zeitlichen Verlauf von Betriebszuständen einer modularen Klimatisierungsvorrichtung 100 für ein Kraftfahrzeug 30 gemäß der eben beschriebenen Ausführungsform. Ausgangspunkt bildet dabei die obere Abbildung i, in der die Klimatisierungsmodule 10a und 10b im zweiten Betriebsmodus M₂ betrieben werden, während das Klimatisierungsmodule 10c nicht aktiv, d. h. deaktiviert, ist. Die beiden Klimatisierungsmodule 10a und 10b können dabei sowohl dieselbe Heizleistung, als auch eine unterschiedliche Heizleistung erbringen. Durch den Betrieb kann eines der Klimatisierungsmodule - vorliegend das Klimatisierungsmodule 10b - vereisen. Dies ist in Abbildung ii dargestellt, wobei die Vereisung des Klimatisierungsmoduls 10b durch eine Schneeflocke symbolisiert wird. Da aufgrund der Vereisung das Klimatisierungsmodule 10b nicht mehr seine volle Leistung erbringen kann bzw. da durch die Vereisung das Klimatisierungsmodule 10b beschädigt werden kann, ist es vorteilhaft, dieses Klimatisierungsmodule 10b zu enteisen.

Erfindungsgemäß ist daher die zentrale Steuereinrichtung 20 ausgebildet, falls eine Vereisung mindestens eines Klimatisierungsmoduls 10b vorliegt, vereiste Klimatisierungsmodule 10b zu bestimmen und diese in einem Enteisungsmodus zur Reduzierung einer Vereisung zu betreiben. Hierzu kann die zentrale Steuereinrichtung 20 beispielsweise ausgebildet sein, in den Kältemittelkreisläufen 1a, 1b, 1c, insbesondere an den Wärmeübertragern der Kältemittelkreisläufe 1a, 1b, 1c, ein oder mehrere Temperaturen zu messen. Unterschreitet eine dieser Temperaturen einen bestimmten Schwellenwert, kann dies eine Vereisung anzeigen, sodass eine Betriebsbedingung zum Starten des Vereisungsbetriebs erfüllt ist. Zudem oder alternativ kann diese Betriebsbedingung auch dann erfüllt sein, falls eine Vereisung mindestens eines Klimatisierungsmoduls 10a, 10b, 10c nur droht, jedoch noch nicht tatsächlich vorliegt. Der in Abbildung iii angedeutete Enteisungsmodus, in dem das Modul 10b betrieben wird, kann vorliegend beispielsweise ein Deaktivieren des vereisten Klimatisierungsmoduls 10b, einen Wechsel vom zweiten in den ersten Betriebsmodus, und/oder einen Betrieb in einem vom optimalen Betriebspunkt abweichenden bzw. ineffizienten Betriebspunkt umfassen. Ferner kann die zentrale Steuereinrichtung 20 auch ausgebildet sein zur Leistungskompensation das bislang inaktive Klimatisierungsmodule - im vorliegenden Beispiel das Klimatisierungsmodul 10c - zu aktivieren, sodass zumindest ein Teil der bisherigen Leistung des Klimatisierungsmoduls 10b vom Klimatisierungsmodule 10c aufgebracht wird. Zudem oder alternativ kann auch das bislang bereits aktive Klimatisierungsmodul 10a bei einer höheren Leistung betrieben werden. Auf vorteilhafte Weise können damit Komforteinbußen aufgrund von Temperaturschwankungen für die Fahrgäste vermieden werden.

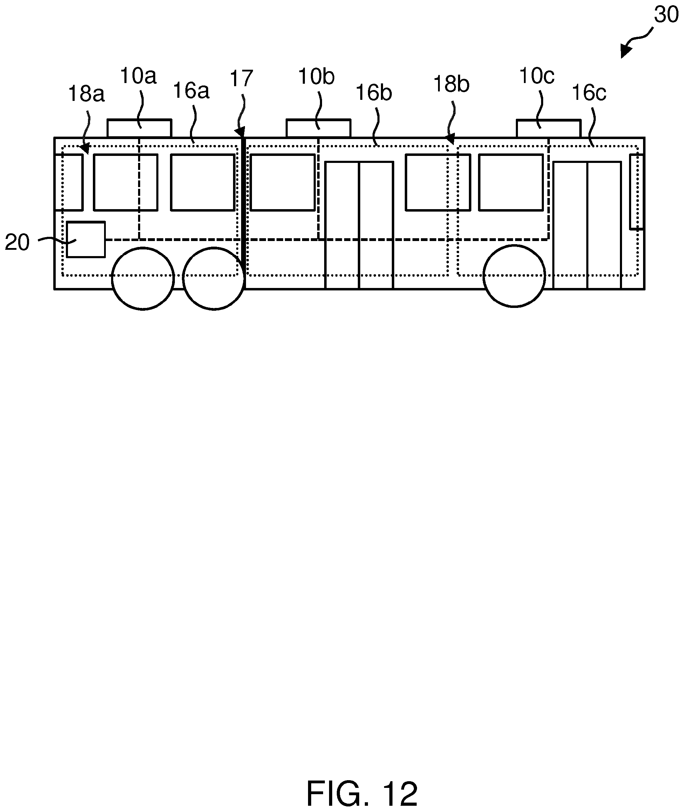

Figur 12 zeigt eine schematische Darstellung eines Kraftfahrzeugs 30 gemäß einer Ausführungsform der Erfindung. Bei dem Kraftfahrzeug 30 handelt es sich vorliegend um einen Omnibus, vorzugsweise einen rein elektrisch angetrieben Omnibus. Dieser weist hierbei eine modulare Klimatisierungsvorrichtung 100 auf. Die Klimatisierungsvorrichtung 100 umfasst hierbei mindestens zwei - in der vorliegenden Ausführungsform drei -, vorzugsweise auf dem Fahrzeugdach angeordnete, Klimatisierungsmodule 10a, 10b, 10c, die jeweils einen Kältemittelkreislauf 1a, 1b, 1c und eine Modulsteuereinrichtung 2a, 2b, 2c umfassen (nicht dargestellt), wobei es für den Fachmann offensichtlich ist, dass das Kraftfahrzeug 30 auch mehr als drei Klimatisierungsmodule 10a, 10b, 10c umfassen kann. Weiterhin umfasst das Kraftfahrzeug 30 eine zentrale Steuereinrichtung 20, die ausgebildet ist jedes der drei Klimatisierungsmodule 10a, 10b, 10c unabhängig voneinander wahlweise in einem ersten Betriebsmodus M₁ zur Fahrzeuginnenraumkühlung oder in einem zweiten Betriebsmodus zur Fahrzeuginnenraumheizung M₂ zu betreiben. Dies schließt allerdings nicht aus, dass die Klimatisierungsmodule 10a, 10b, 10c wahlweise auch in weiteren Betriebsmodi betrieben werden können. So können die einzelnen Klimatisierungsmodule 10a, 10b, 10c beispielsweise auch ganz deaktiviert, d. h. funktionslos gestellt, werden. Erfindungsgemäß wird somit ein Kraftfahrzeug 30 mit einer modulare Klimatisierungsvorrichtung 100 bereitgestellt, bei der die einzelnen Klimatisierungsmodule 10a, 10b, 10c gleichzeitig unterschiedliche Funktionen ausführen können, bzw. die Anzahl der betriebenen Klimatisierungsmodule 10a, 10b, 10c variabel eingestellt werden kann.

Zur Ansteuerung der jeweiligen Klimatisierungsmodule 10a, 10b, 10c steht die zentrale Steuereinrichtung 20 mit den Klimatisierungsmodulen 10a, 10b, 10c über entsprechende Kommunikations- bzw. Datenleitungen, beispielsweise in Form von CAN- und/oder LIN-Busleitungen, in Verbindung. Entsprechend kann die zentralen Steuereinrichtung 20 somit sowohl Steuerbefehle an die einzelnen Modul-Steuereinrichtungen 2a, 2b, 2c senden, als von diesen Informationen betreffend das jeweilige Klimatisierungsmodul 10a, 10b, 10c empfangen. In diesem Zusammenhang kann somit auch von einem Master-Slave-System gesprochen werden. Weiterhin können die Kältemittelkreisläufe 1a, 1b, 1c der einzelnen Klimatisierungsmodule 10a, 10b, 10c identisch sein, beispielsweise gemäß eines der zuvor beschriebenen Ausführungsbeispiele. Alternativ können die einzelnen Klimatisierungsmodule 10a, 10b, 10c jedoch auch verschiedene Ausführungsformen der Kältemittelkreisläufe 1a, 1b, 1c aufweisen. Vorzugsweise sind die einzelnen Klimatisierungsmodule 10a, 10b, 10c ferner auch jeweils einem bestimmten Klimatisierungsbereich 16a, 16b, 16c des Fahrzeugsinnenraums zugeordnet, wodurch eine zonale Klimatisierung des Fahrzeuginnenraums erreicht werden kann. Beispielsweise kann vorliegend das Klimatisierungsmodul 10c einem Klimatisierungsbereich 16c um den Fahrersitz zugeordnet sein, das Klimatisierungsmodule 10b einem mittleren Klimatisierungsbereich 16b des Kraftfahrzeugs 30 und das Klimatisierungsmodul 10a einem hinteren Klimatisierungsbereich 16a des Kraftfahrzeugs 30 zugeordnet sein. Befindet sich der Omnibus somit beispielsweise auf einer Betriebsfahrt, d. h. dass sich lediglich der Busfahrer im Fahrzeuginnenraum aufhält, kann z. B. nur das Klimatisierungsmodul 10c zur Klimatisierung verwendet werden, während die Klimatisierungsmodule 10a und 10b inaktiv sind. Ferner kann das Kraftfahrzeug 30 mindestens eine ein- und ausfahrbare Trennwand 17 zur Trennung Innenraums in verschiedene Innenraumbereiche 18a, 18b umfassen. Vorliegend trennt die Trennwand 17 den Innenraum in einen hinteren ersten Innenraumbereich 18a und einen vorderen zweiten Innenraumbereich 18b. Hierbei kann jedem Innenraumbereich 18a, 18b mindestens ein Klimatisierungsmodul 10a, 10b, 10c zur Klimatisierung des jeweiligen Innenraumbereichs 18a, 18b zugeordnet sein. Vorliegend ist dabei dem ersten Innenraumbereich 18a das Klimatisierungsmodul 10a zugeordnet und dem zweiten Innenraumbereich 18b sind die Klimatisierungsmodule 10b und 10c zugeordnet. Entsprechend ist ersichtlich, dass die Innenraumbereiche 18a, 18b mit den vorgenannten Klimatisierungsbereichen 16a, 16b, 16c identisch sein können - wie dies vorliegend im hinteren Teil des Omnibusses der Fall ist-jedoch auch unterschiedliche Bereich bezeichnen können. So weist im vorliegenden Fall der zweite Innenraumbereich 18b zwei Klimatisierungsbereiche 16b und 16c auf. Insgesamt wird somit auf vorteilhafte Weise ein Kraftfahrzeug 30 mit einer modularen und damit skalierbare bzw. je nach Einsatzbereich und/oder Kraftfahrzeug 30 flexibel anpassbare Klimatisierungsvorrichtung 100 bereitgestellt.

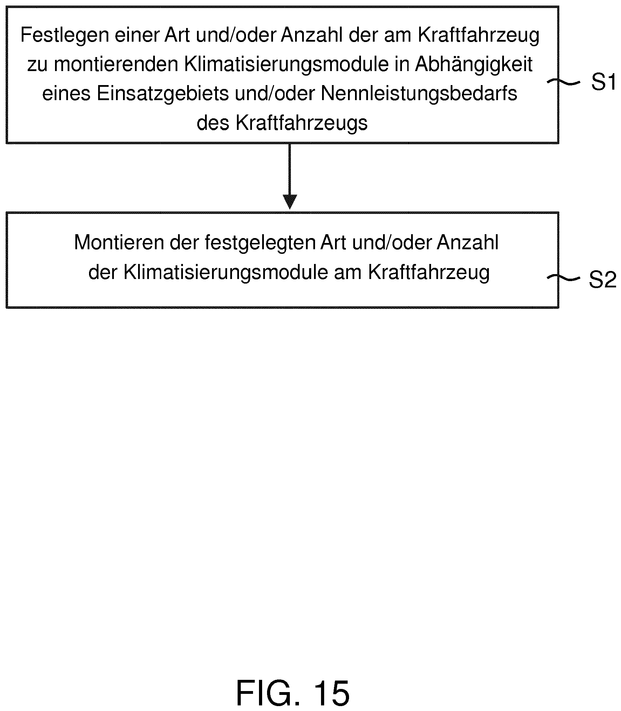

Figur 15 zeigt ein Flussdiagramm eines Verfahrens zur Vorkonfiguration einer modularen Klimatisierungsvorrichtung 100 für ein Kraftfahrzeug 30 gemäß einer Ausführungsform der Erfindung. Vorzugsweise handelt es sich bei der modularen Klimatisierungsvorrichtung 100 dabei eine modulare Klimatisierungsvorrichtung 100 für ein elektrisch angetriebenes Kraftfahrzeug 30. Im Schritt S1 umfasst das Verfahren das Festlegen einer Art und/oder Anzahl der am Kraftfahrzeug 30 zu montierenden Klimatisierungsmodule 10a, 10b, 10c in Abhängigkeit eines Einsatzgebiets und/oder Nennleistungsbedarfs des Kraftfahrzeugs 30. Bei dem Einsatzgebiet kann es sich beispielsweise um ein Heißland oder Kaltland handeln, für die jeweils ein bestimmter Nennleistungsbedarf zur Klimatisierung definiert ist. Im Schritt S2 erfolgt dann ein Montieren der festgelegten Art und/oder Anzahl der Klimatisierungsmodule am Kraftfahrzeug 30. Diesen Zusammenhang kann somit unter dem Ausdruck "Vorkonfiguration" die Anordnung und Zusammenstellung der modularen Klimatisierungsvorrichtung 100 vor deren geplante Inbetriebnahme verstanden werden. Dies umfasst dabei auch Umbaumaßnahmen im Rahmen einer Änderung des Einsatzgebiets, beispielsweise bei einer Verlegung des Kraftfahrzeugs 30 von einem Heiß- in ein Kaltland. Auf vorteilhafte Weise wird dadurch eine Möglichkeit zum dynamischen Anpassen der Klimatisierungsvorrichtung 100 an unterschiedliche Einsatzgebiete bereitgestellt.

Im Folgenden soll nun detailliert auf mögliche Ausführungsformen der Kältemittelkreisläufe 1a, 1b, 1c der einzelnen Klimatisierungsmodule 10a, 10b, 10c eingegangen werden. Hierbei sei jedoch erwähnt, dass folgenden Ausführungsformen lediglich exemplarisch mögliche Ausgestaltungen einzelner Kältemittelkreisläufe 1a, 1b, 1c zeigen. Die gesamte Klimatisierungsvorrichtung 100 kann je nach Kraftfahrzeug oder Verwendungszweck mehrere identische Klimatisierungsmodule 10a, 10b, 10c, aber auch eine Kombination von Klimatisierungsmodulen 10a, 10b, 10c mit verschiedenen - nun eingehender beschriebenen - Kältemittelkreisläufen 1a, 1b, 1c umfassen.

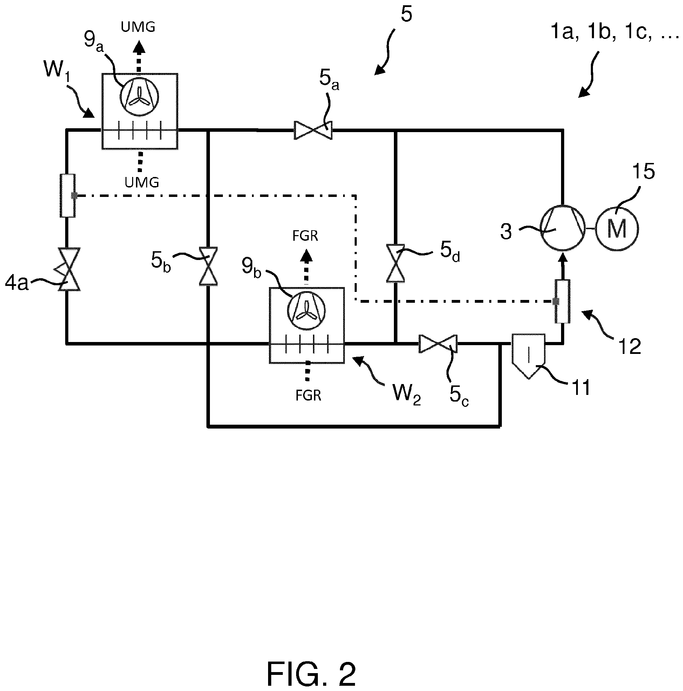

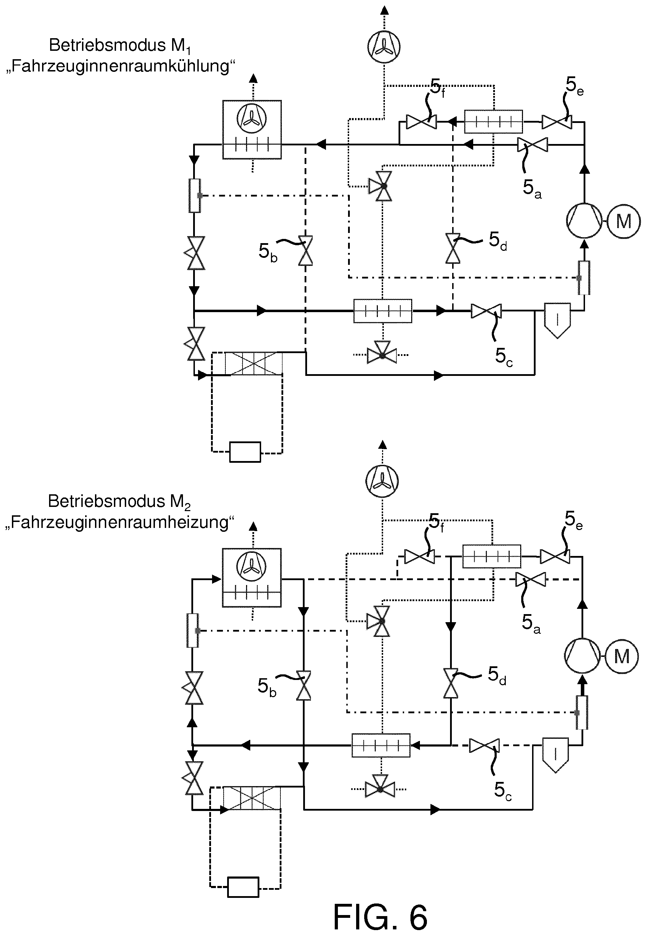

Figur 2 zeigt einen Kältemittelkreislauf 1a, 1b, 1c eines Klimatisierungsmoduls 10a, 10b, 10c gemäß einer ersten Ausführungsform der Erfindung. Vorliegend ist dabei der gesamte Kältemittelkreislauf 1a, 1b, 1c gezeigt, wobei in Abhängigkeit des Betriebsmodus des Klimatisierungsmoduls 10a, 10b, 10c teilweise nur bestimmte Bereiche des dargestellten Kältemittelkreislaufs 1a, 1b, 1c tatsächlich vom Kältemittel durchströmt werden. Der Aspekt der je nach Betriebsmodus unterschiedlichen Strömungsführung wird später bei der Beschreibung von Figur 6 eingehender diskutiert. Um bei dem in Figur 2 dargestellten Kältemittelkreislauf 1a, 1b, 1c einen Kältemittelfluss zu starten oder in Gang zu halten umfasst der Kältemittelkreislauf 1a, 1b, 1c einen, vorzugsweise über einen Elektromotor 15 angetrieben, Verdichter 3. Der Verdichter 3, welcher auch als Kompressor bezeichnet werden kann, kann hierbei beispielweise in Form eines Rollkolbens, eines Scrollverdichters, eines Hubkolbenverdichters, eines Schraubenverdichters und/oder eines Turboverdichters ausgebildet sein. Mittels dieses Bauteils wird das Kältemittel, vorzugsweise CO₂, komprimiert. Weiterhin umfasst der Kältemittelkreislauf 1a, 1b, 1c einen ersten Wärmeübertrager W₁ zum Wärmeaustausch mit einem Fahrzeugaußenraum und/oder einer Komponente eines elektrischen Antriebs, eine erste Drosseleinrichtung 4a, beispielweise in Form eines Expansionsventils und/oder eines Kapillarrohrs, sowie einen zweiten Wärmeübertrage W₂ zum Wärmeaustausch mit einem Fahrzeuginnenraum und/oder einer Komponente eines elektrischen Antriebs. In der vorliegenden Ausführungsform sind die beiden Wärmeübertrager W₁, W₂ als Luft/Kältemittel-Wärmeübertrager, z. B. als Rippenrohrwärmeübertrage Flachrohrwärmeübertrager und/oder Microchannel-Wärmeübertrager, ausgebildet. Als Rippenrohrwärmeübertragen soll hierbei allgemein ein Apparat verstanden werden, der mindestens ein rohrförmiges Bauteil umfasst, das zur Verbesserung der übertragbaren Wärme- oder Kälteleistung Rippen aus gut wärmeleitendem Material besitzt. Vorzugsweise dienen die Rippen zur Vergrößerung der Rohroberfläche und können auf der Außenseite zum Beispiel durch Walzen, durch Auflöten bzw. Schweißen, durch Aufpressen oder Einnuten in die Rohrwand hergestellt werden. Anstelle eines Rippenrohrwärmeübertrages können allerdings auch andere Bauformen von Wärmeübertragern, im Speziellen Luft/Kältemittel-Wärmeübertragern, verwendet werden, ohne den Bereich der Erfindung zu verlassen.

Zusammen mit der Ventileinrichtung 5, umfassend die Ventilen 5ₐ-5_{d}, und den entsprechenden Kältemittelleitungen bilden die bisherigen Komponenten einen geschlossenen - im Folgenden auch als Hauptkältemittelkreislauf bezeichneten - Kältemittelkreislauf 1a, 1b, 1c, der wahlweise als Kältemaschine, vorzugsweise zur Fahrzeuginnenraumkühlung, oder auch als Wärmepumpe, vorzugsweise zur Fahrzeuginnenraumheizung, betrieben werden kann. Zur Unterscheidung dieser Betriebsmodi werden im Folgenden die Begriffe erster Betriebsmodus M₁ und zweiter Betriebsmodus M₂ verwendet. Der erste Betriebsmodus M₁ soll dabei vorzugsweise zur Fahrzeuginnenraumkühlung und/oder Kühlung einer Komponente eines elektrischen Antriebs dienen, während der zweite Betriebsmodus M₂ vorzugsweise zur Fahrzeuginnenraumheizung und/oder zu Beheizung einer Komponente eines elektrischen Antriebs dienen soll. Die beiden Betriebsmodi M₁ und M₂ werden hierbei durch ein entsprechendes Verschalten der Ventile 5ₐ-5_{d} erreicht, so dass im ersten Betriebsmodus M₁ der erste Wärmeübertrager W₁ stromauf und im zweiten Betriebsmodus M₂ der erste Wärmeübertrager W₁ stromab vom zweiten Wärmeübertrager W₂ geschaltet ist. Bzw. anders ausgerückt kann im ersten Betriebsmodus M₁ der erste Wärmeübertrager als Kondensator bzw. Gaskühler und der zweite Wärmeübertrager W₂ als Verdampfer fungieren, während im zweiten Betriebsmodus der erste Wärmeübertrager als Verdampfer und der zweite Wärmeübertrager W₂ als Kondensator bzw. Gaskühler fungiert. Details zu den unterschiedlichen Ventilstellungen - welche vom Prinzip für alle noch folgenden Ausführungsformen dieselbe ist - werden im Zuge der Figurenbeschreibung von Figur 6 eingehender diskutiert werden. Vorliegend steht zunächst der rein konstruktive Aufbau der verschiedenen Ausführungsformen im Vordergrund.

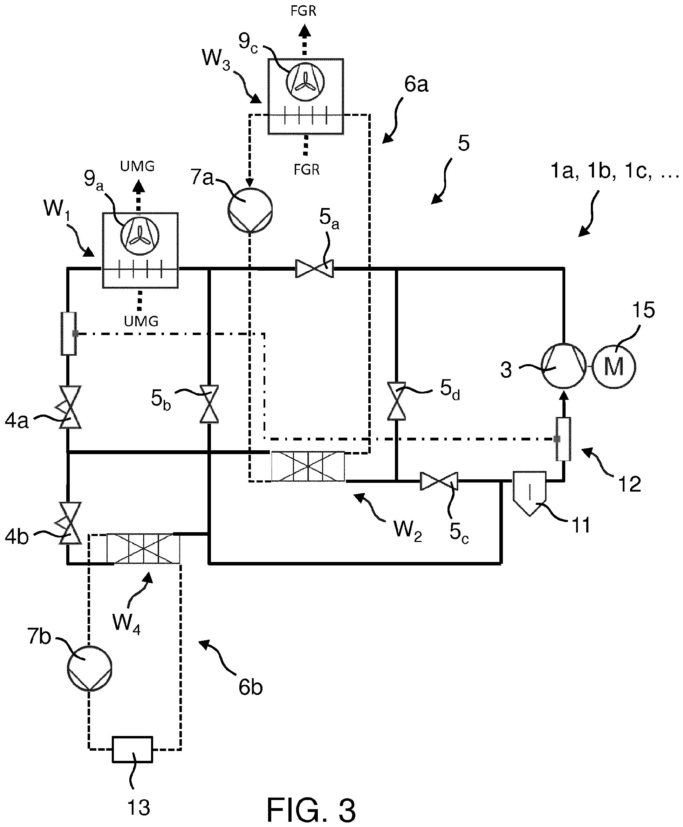

Weiterhin sollen sowohl in der in Figur 2 dargestellten, wie auch in den Figuren 3-10 dargestellten Ausführungsformen die Ventile 5ₐ-5ₕ , die Ventilatoren 9ₐ-9_{d}, und/oder der Verdichter 3 in Verbindung mit einer nicht näher dargestellten Modul-Steuereinrichtungen 2a, 2b, 2c stehen, wobei letztere - wie in Figur 1 gezeigt - in Verbindung mit einer übergeordneten zentralen Steuereinrichtung 20 stehen. Dadurch können beispielweise Steuerbefehle an die Ventile 5a-5ₕ übermittelt werden, wodurch die z. B. zwischen einer Offenstellung in eine Geschlossenstellung wechseln können oder umgekehrt. Zudem oder alternativ kann mittels der zentralen Steuereinrichtung 20 bzw. der Modul-Steuereinrichtungen 2a, 2b, 2c auch die von den Ventilatoren 9ₐ-9_{d} erzeugte Luftströmung und/oder die vom Verdichter 3 erzeugte Kältemittelströmung reguliert werden. Insgesamt kann so die von einem Klimatisierungsmodule 10a, 10b, 10c aufgenommene und/oder abgegebene Wärmemenge und/oder eine vom und/oder ins Klimatisierungsmodul 10a, 10b, 10c strömende Luftströmung unabhängig von den weiteren vorhandenen ins Klimatisierungsmodulen 10a, 10b, 10c reguliert werden.

Neben den bislang diskutierten Komponenten kann der Hauptkältemittelkreislauf auch weitere optionale Bauteile, darunter - wie in der in Figur 2 gezeigten Ausführungsform - einen Sammler 11 zur Trennung von gasförmigen und flüssigen Kältemittel, umfassen. Da in diesem Bauteil auch ein Teil des - eventuell vorhandenen - flüssigen Kältemittels, vorzugsweise im Bodenbereich des Sammlers 11, zurückgehalten bzw. gesammelt werden kann, kann der Sammler 11 dabei auch als Sammler bzw. Sammelbehälter bezeichnet werden. Auf vorteilhafte Weise kann so sichergestellt werden, dass möglichst nur gasförmiges Kältemittel in den Verdichter 3 gelangt, da Flüssigkeiten hier Schäden verursachen könnten. Weiterhin kann der Kältemittelkreislauf 1a, 1b, 1c auch ein Zusatzkühler 12 umfassen. Dieser koppelt thermisch einen Bereich des Kältemittelkreislaufs 1a, 1b, 1c zwischen der ersten Drosseleinrichtung 4a und dem ersten Wärmeübertrager W₁ mit einem Bereich des Kältemittelkreislaufs 1a, 1b, 1c vor dem Eingang des Verdichters 3. In Figuren 2 sowie den folgenden Figuren 3-10 wird diese thermische Kopplung durch die Strichpunktlinie symbolisiert. Bevorzugt wird der Zusatzkühler 12 dabei mittels eines Wärmetauschers realisiert, jedoch können auch andere Formen der Wärmekopplung verwendet werden ohne den Bereich der Erfindung zu verlassen. Der Zusatzkühler 12 ermöglicht dabei auf vorteilhafte Weise die Wirksamkeit des Kompressors zu erhöhen.

Figur 3 zeigt einen schematischen Schaltplan eines Kältemittelkreislaufs 1a, 1b, 1c gemäß einer zweiten Ausführungsform der Erfindung. Im Vergleich zu der in Figur 2 gezeigten ersten Ausführungsform ist vorliegend im Hauptkältemittelkreislauf der zweite Wärmeübertrager W₂ anstatt als Luft/Kältemittel-Wärmeübertrager als Kühlmittel/Kältemittel-Wärmeübertrager ausgebildet. Dabei kann der Kühlmittel/Kältemittel-Wärmeübertrager beispielweise in Form eines Plattenwärmeübertragers ausgebildet sein. Unter einem Plattenwärmeübertrager soll allgemein ein Apparat verstanden werden, der wellenförmig profilierten Platten umfasst, die so zusammengesetzt sind, dass jeweils in den aufeinanderfolgenden Zwischenräumen einmal das aufzuwärmende und danach das wärmeabgebende Medium fließt. Das Plattenpaket ist vorzugsweise nach außen und zwischen den Medien abgedichtet und wird beispielsweise mit Spannschrauben zusammengehalten. Der zweite Wärmeübertrager W₂ steht vorliegend auch mit einem Kühlmittelkreislauf, der im Folgenden zur besseren Unterscheidung als erster Kühlmittelkreislauf 6a bezeichnet wird, in Verbindung. Mit anderen Worten wird der zweite Wärmeübertrager W₂ somit sowohl vom Kältemittel, vorzugsweise CO₂, des Kältemittelkreislaufs 1a, 1b, 1c als auch vom Kühlmittel, vorzugsweise Wasser, des ersten Kühlmittelkreislaufs 6a durchströmt, wobei kein Kühl- bzw. Kältemittelaustausch zwischen den beide Kreisläufen erfolgt. Der zweite Wärmeübertrager W₂ ermöglicht allerdings einen Wärmeübertrag vom Kältemittelkreislauf 1a, 1b, 1c auf den ersten Kühlmittelkreislauf 6a oder umgekehrt. Weiterhin umfasst der erste Kühlmittelkreislauf 6a eine Pumpe zur Zirkulation des Kühlmittels, die zur Unterscheidung als erste Pumpe 7a bezeichnet werden soll, sowie einen weiteren Wärmeübertrager, der im Folgenden als dritter Wärmeübertrager W₃ bezeichnet werden soll. Vorliegend handelt es sich bei dem dritten Wärmeübertrager W₃ um einen Luft/Kühlmittel-Wärmeübertrager zum Wärmeaustausch mit einem Fahrzeuginnenraum, wobei - ohne den Bereich der Erfindung zu verlassen - auch andere Bauformen von Wärmeübertragern verwendet werden können. Zur Regulierung des Luftstroms in den Fahrzeuginnenraum kann ferner auch noch ein Ventilator 9_{c} am dritten Wärmeübertrager W₃ angeordnet sein. Die Besonderheit dieser zweiten Ausführungsform liegt nun darin, dass das Heizen bzw. Kühlen des Fahrzeuginnenraums nicht durch unmittelbaren Wärmeaustausch zwischen dem Kältemittelkreislauf 1a, 1b, 1c und dem Fahrzeuginnenraum, sondern über einen mittelbaren Wärmeaustausch über den ersten Kühlmittelkreislauf 6a erfolgt. Auf vorteilhafte Weise kann dadurch die Betriebssicherheit der Klimatisierungsvorrichtung 100 erhöht werden, da so das beispielsweise Risiko einer direkten Leckage von für den Menschen oftmals gefährliche Kältemittel - wie CO₂ - in den Fahrgastraum minimiert werden kann.

Darüber hinaus unterscheidet sich der in Figur 3 gezeigte Kältemittelkreislauf 1a, 1b, 1c von dem in Figur 2 gezeigten Kältemittelkreislauf 1a, 1b, 1c - neben einer zweiten Drosseleinrichtung 4b, auf deren Funktion im Zuge der Beschreibung der beiden Betriebsmodi in Figur 6 noch eingegangen wird - durch einen weiteren Wärmeübertrager im Kältemittelkreislauf 1a, 1b, 1c. Dieser, im Folgenden als vierter Wärmeübertrager W₄ bezeichnete, Wärmeübertrager ist dadurch gekennzeichnet, dass er im ersten Betriebsmodus M₁ parallel zum zweiten Wärmeübertrager W₂ und im zweiten Betriebsmodus M₂ parallel zum ersten Wärmeübertrager W₁ schaltbar ist. Vorliegend ist auch dieser vierte Wärmeübertrager W₄ als Kühlmittel/Kältemittel-Wärmeübertrager ausgebildet und steht mit einem Kühlmittelkreislauf, der zur besseren Unterscheidung als zweiter Kühlmittelkreislauf 6b bezeichnet werden soll, in Verbindung. Besonders bevorzugt handelt es sich bei diesem zweiten Kühlmittelkreislauf 6b um einen Kühlmittelkreislauf zur Kühlung einer elektrischen Maschine und/oder eines elektrischen Energiespeichers 8, beispielsweise einer Traktionsbatterie. Zu diesem Zweck kann der zweiten Kühlmittelkreislauf 6b ferner eine, als zweite Pumpe 7b bezeichnete, Pumpe zur Zirkulation des Kühlmittels, beispielsweise Wasser, umfassen und/oder thermisch mit einer elektrischen Maschine und/oder einem elektrischen Energiespeicher 13, vorzugsweise über eine Kühlplatte, gekoppelt sein. Zudem oder alternativ kann das Kühlmittel des zweiten Kühlmittelkreislauf 6b dabei auch zumindest einen Teil einer elektrischen Maschine und/oder eines elektrischen Energiespeichers 13 um- und/oder durchströmen. Insgesamt ermöglicht der vierte Wärmeübertrager W₄ inklusive eines daran angeschlossenen zweiten Kühlmittelkreislaufs 6b, dass auf vorteilhafte Weise einerseits eine Kühlung des elektrischen Energiespeichers 8 und/oder der elektrischen Maschine erreicht werden kann, während gleichzeitig die Abwärme dieser Komponenten zur Fahrzeuginnenraumheizung verwendet werden kann.

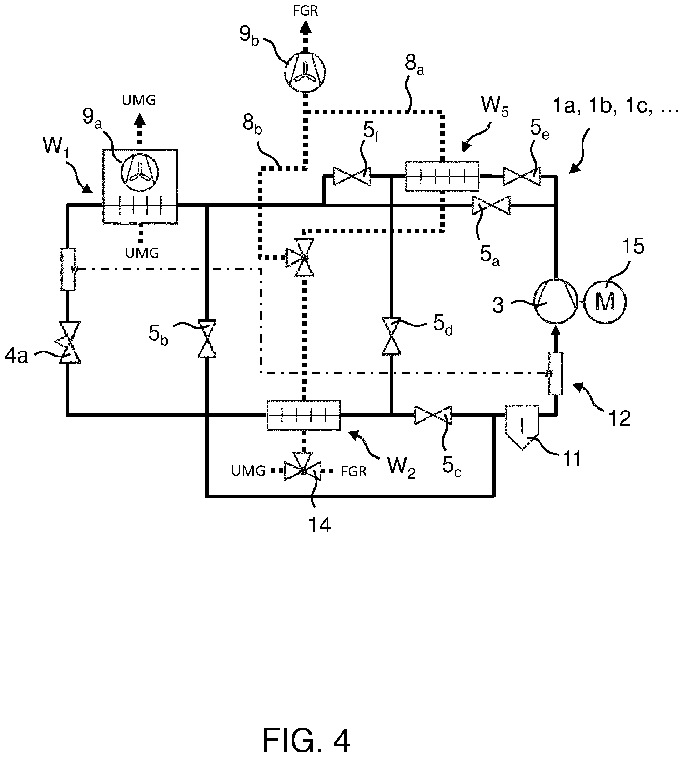

Figur 4 zeigt einen schematischen Schaltplan eines Kältemittelkreislaufs 1a, 1b, 1c gemäß einer dritten Ausführungsform der Erfindung. Neben den allen Ausführungsformen gemeinsamen Hauptkältemittelkreislauf - umfassend den Verdichter 3, den ersten Wärmeübertrager W₁, die erste Drosseleinrichtung 4a, den zweiten Wärmeübertrager W₂ sowie die Ventile 5ₐ-5_{d} - weist auch diese Ausführungsform wiederum die - bereits diskutierten - optionalen Komponenten Sammler 11 und Zusatzkühler 12 auf. Kennzeichnend für diese Ausführungsform ist hierbei, dass der Kältemittelkreislauf 1a, 1b, 1c zudem einen, als fünften Wärmeübertrager W₅ bezeichneten, Wärmeübertrager sowie zwei weitere Ventile 5ₑ und 5_{f} umfasst. Der fünfte Wärmeübertrager W₅ ist vorliegend als Luft/Kältemittel-Wärmeübertrager, beispielsweise in Form eines Rippenrohr-Wärmeübertragers, eines Flachrohrwärmeübertragers und/oder eines Microchannel-Wärmeübertragers, zum Wärmeaustausch mit einem Fahrzeuginnenraum ausgebildet. Hierzu kann der fünfte Wärmeübertrager W₅ thermisch an eine Luft zum Fahrgastraum führende Luftleitung 8ₐ gekoppelt sein bzw. direkt an einen in den Fahrgastraum strömenden Luftstrom. Im Speziellen kann der fünfte Wärmeübertrager W₅ thermisch an einen Luftstrom gekoppelt sein, die zuvor bereits im thermischen Kontakt mit dem zweiten Wärmeübertrager W₂ stand. Mit anderen Worten kann ein Luftstrom zunächst Wärme mit dem zweiten Wärmeübertrager W₂ und anschließend Wärme mit dem fünften Wärmeübertrager W₅ austauschen, bevor er in den Fahrgastraum strömt. Hierbei kann der in den Fahrgastraum strömende Luftstrom nach dem Wärmeaustausch mit dem zweiten Wärmeübertrager W₂ geteilt werden, vorliegend in einen durch Luftleitung 8ₐ und einen in Luftleitung 8_{b} strömenden Teil. Während der durch Luftleitung 8_{b} strömende Luftstrom direkt in den Fahrgastraum geleitet wird, kann der durch Luftleitung 8ₐ strömende Luftstrom vor seinem Eintritt in den Fahrgastraum Wärme mit dem fünften Wärmeübertrager W₅ austauschen. Der fünfte Wärmeübertrager W₅ kann dabei durch seine Anordnung im Kältemittelkreislauf 1a, 1b, 1c sowohl im ersten Betriebsmodus M₁ als auch im zweiten Betriebsmodus M₂ in Serie zum ersten und zweiten Wärmeübertrager W₁, W₂ geschaltet werden. Auf vorteilhafte Weise ermöglicht der fünfte Wärmeübertrager W₅ im Kältemittelkreislauf 1a, 1b, 1c hierbei ein Entfeuchten der zuvor mittels des zweiten Wärmeübertragers W₂ gekühlten Luft, worauf ebenfalls bei der Darstellung der beiden Betriebsmodi M₁ und M₂ unter Figur 6 genauer eingegangen wird.

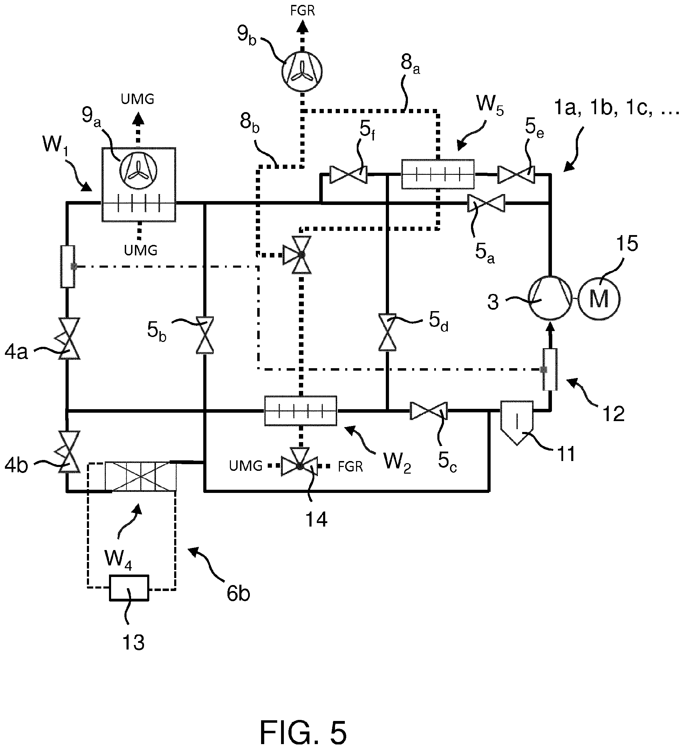

Figur 5 zeigt einen schematischen Schaltplan eines Kältemittelkreislaufs 1a, 1b, 1c gemäß einer vierten Ausführungsform der Erfindung, welche eine Weiterbildung der eben beschriebenen dritten Ausführungsform (Figur 4) darstellt. Zusätzlich zu den Komponenten der dritten Ausführungsform umfasst der Kältemittelkreislauf 1a, 1b, 1c vorliegend einen - im Zuge der Beschreibung zu Figur 3 diskutierten - vierten Wärmeübertrager W₄ sowie eine zweite Drosseleinrichtung 4b. Der vierte Wärmeübertrager W₄ ist vorliegend erneut als Kühlmittel/Kältemittel-Wärmeübertrager ausgebildet und im ersten Betriebsmodus M₁ parallel zum zweiten Wärmeübertrager W₂ sowie im zweiten Betriebsmodus M₂ parallel zum ersten Wärmeübertrager W₁ schaltbar. Wie eingehend unter Figur 3 beschrieben kann dieser vierte Wärmeübertrager W₄ mit einem zweiten Kühlmittelkreislauf 6b in Verbindung stehen, der bevorzugt zur Kühlung einer elektrischen Maschine und/oder eines elektrischen Energiespeichers 8 verwendet wird. Entsprechend kann der zweite Kühlmittelkreislauf 6b eine, als zweite Pumpe 7b bezeichnete, Pumpe zur Förderung von Kühlmittel und/oder ein oder mehrere Wärmeübertrager umfassen bzw. thermisch mit einer elektrischen Maschine und/oder einem elektrischen Energiespeicher 13 gekoppelt sein. Auf vorteilhafte Weise kann somit auch in der vierten Ausführungsform eine Kühlung des elektrischen Energiespeichers 8 und/oder der elektrischen Maschine, bei gleichzeitigem Nutzen deren Abwärme zur Fahrzeuginnenraumheizung erreicht werden.

Figur 6 zeigt die Kältemittelpfade im ersten Betriebsmodus M₁ (obere Abbildung) und zweiten Betriebsmodus M₂ (untere Abbildung) für die eben beschriebene vierte Ausführungsform der Erfindung (Figur 5). Aus Gründen der Übersichtlichkeit wurde dabei - mit Ausnahme der Ventile 5ₐ-5_{f} - auf Bezugszeichen verzichtet. Im Fall des ersten Betriebsmodus M₁ zur Fahrzeuginnenraumkühlung (obere Abbildung) strömt - angetrieben vom Verdichter 3 - gasförmiges und durch den Verdichter 3 unter einem hohen Druck gesetztes Kältemittel über das offene Ventil 5ₐ in Richtung des ersten Wärmeübertragers W₁, wobei der optionale fünfte Wärmeübertrager W5 durch Öffnen der Ventile 5ₑ und 5_{f} in den Kältemittelkreislauf 1a, 1b, 1c miteingebunden werden kann. Der erste Wärmeübertrager W₁ sowie der optionale fünfte Wärmeübertrage W₅ fungieren im Betriebsmodus M₁ als Kondensatoren und/oder Gaskühler. D. h., im Bereich dieser Komponenten geht das gasförmige Kältemittel, vorzugsweise CO₂, unter Wärmeabgabe in den flüssigen Zustand über. Im Fall des ersten Wärmeübertragers W₁ wird diese Wärme dabei an den Fahrzeugaußenraum und im optionalen Fall des fünften Wärmeübertragers W₅ an einen - in Luftleitung 8ₐ geführten - Luftstrom zum Fahrzeuginnenraum abgegeben. Im Anschluss daran, d. h., nach dem ersten Wärmeübertrager W₁, passiert das Kältemittel dann die erste Drosseleinrichtung 4a, durch die das Kältemittel entspannt, d. h. der Druck abgebaut, wird, wodurch sich die Siedetemperatur des Kältemittels erniedrigt. Im nachgeschalteten zweiten Wärmeübertrager W₂ verdampft das Kältemittel unter Wärmeaufnahme aus der Umgebung des zweiten Wärmeübertragers W₂. Entsprechend fungiert der zweite Wärmeübertrager W₂ als Verdampfer. Die Wärme stammt vorzugsweise aus dem Fahrzeuginnenraum, wodurch dieser abgekühlt wird. Hierzu steht der zweite Wärmeübertragen W₂ - wie bereits diskutiert - mit einer Luftleitung 8b in Verbindung, die Luft zum Fahrzeuginnenraum führenden kann. Anschließend strömt das Kältemittel über das geöffnete Ventil 5c strömt zurück zum Verdichter 3, bei dem das gasförmige Kältemittel komprimiert wird und der Prozess von neuem beginnt.

Parallel zur Durchströmung des zweiten Wärmebetrages W₂, kann in einer optionalen Variante ein Teil des Kältemittels auch über eine weitere, als zweite Drosseleinrichtung 4b bezeichnete, Drosseleinrichtung und einen vierten Wärmeübertrage W₄ zum Verdichter 3 strömen. Der vierte Wärmeübertrager W₄ ist hierbei vorzugsweise über einen zweiten Kühlmittelkreislauf 6b thermisch mit einem elektrischen Energiespeicher 13 gekoppelt. Auch der vierte Wärmeübertrager W₄ fungiert vorliegend als Verdampfer und nimmt vorzugsweise überschüssige Abwärme des elektrischen Energiespeichers 13 auf und transportiert diese mittels des zweiten Kühlmittelkreislaufs 6b zum vierten Wärmeübertrager W₄. Auf vorteilhafte Weise kann somit einerseits eine notwendige Kühlung des elektrischen Energiespeichers 13 und/oder einer anderen mit dem zweiten Kühlmittelkreislaufs 6b in thermischen Kontakt stehenden elektrischen Maschine erreicht werden. Die Abwärme dieser Komponenten wird dabei vorliegend nicht ungenutzt an die Fahrzeugumgebung abgegeben, sondern über den fünften Wärmeübertrager W5 zur Entfeuchtung der zuvor mittels des zweiten Wärmeübertragers W₂ gekühlten Luft verwendet. D. h. in diesem Betriebsmodus kann Luft aus dem Fahrzeuginnenraum und/oder dem Fahrzeugaußenraum mittels des zweiten Wärmeübertragers W₂ gekühlt, anschließend mittels des fünften Wärmeübertrager W₅ leicht erwärmt und damit entfeuchtet und zuletzt in den Fahrzeuginnenraum geleitet werden.

Die untere Abbildung zeigt die Strömungsführung bzw. die Kältemittelpfade im Fall des zweiten Betriebsmodus M₂ zur Fahrzeuginnenraumheizung. Ausgehend vom Verdichter 3 strömt das gasförmige Kältemittel im Betriebsmodus M₂ nicht wie zuvor zunächst zum ersten sondern zum zweiten Wärmeübertrager W₂, wobei diesem in der vorliegenden Ausführungsform der optionale fünfte Wärmeübertrager W₅ vorgeschaltet ist. Hierzu werden vorliegend die Ventil 5ₐ und 5f geschlossen, während die Ventile 5ₑ und 5_{d} geöffnet sind. Sind der optionale fünfte Wärmeübertrager W₅ samt der entsprechenden optionalen Ventile 5ₑ und 5_{f} nicht vorhanden, so kann durch entsprechendes Versetzen des Ventils 5ₐ (siehe Figur 2) dasselbe Umleiten des Kältemittelflusses erreicht werden. Sowohl der fünfte Wärmeübertrager W₅ als auch der zweite Wärmeübertrager W₂ fungieren im zweiten Betriebsmodus M₂ als Kondensatoren bzw. Gaskühlr. D. h., gasförmiges Kältemittel wird dort unter Wärmeabgabe teilweise bzw. komplett verflüssigt. Diese Wärmemenge kann hierbei an einen Luftstrom zum Fahrzeuginnenraum abgegeben werden, wodurch dieser beheizt werden kann. Nach dem zweiten Wärmeübertrager W₂ strömt das verflüssigte Kältemittel im Hauptkältemittelkreislauf weiter zur ersten Drosseleinrichtung 4a und wird dort entspannt, bevor es in den ersten Wärmeübertrager W₁ tritt. Der erste Wärmeübertrager W₁ fungiert dabei als Verdampfer, d. h. das zunächst noch flüssige Kältemittel verdampft, wobei der Umgebung des ersten Wärmeübertrager W₁ - vorliegend dem Fahrzeugaußenraum - Wärme entzogen wird. Über das geöffnete Ventil 5_{b} strömt das gasförmige Kältemittel dann erneut zum Verdichter 3 und der Zyklus beginnt erneut. Parallel dazu kann in der vorliegenden Ausführungsform ein Teil des Kältemittels wiederum auch über die optionale zweite Drosseleinrichtung 4b entspannt werden und in den vierten Wärmeübertrager W₄ eintreten, bevor es zum Verdichter 3 gelangt. Der vierte Wärmeübertrager W₄ fungiert somit im zweiten Betriebsmodus M₂ - wie auch im ersten Betriebsmodus M₁ - als Verdampfer und nimmt Abwärme beispielsweise eines thermisch an den vierten Wärmeübertrager W₄ gekoppelten elektrischen Energiespeichers 13 auf.

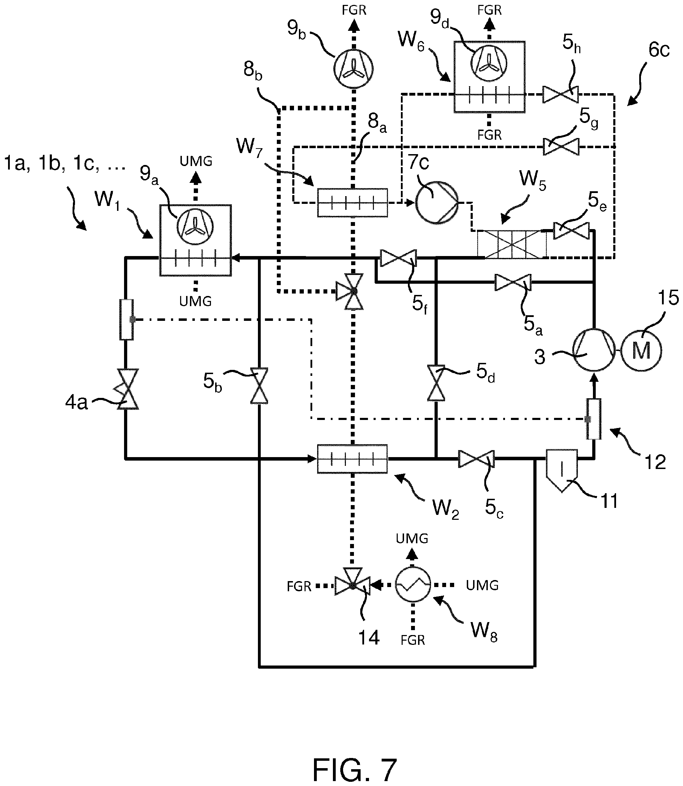

Figur 7 zeigt einen schematischen Schaltplan eines Kältemittelkreislaufs 1a, 1b, 1c gemäß einer fünften Ausführungsform der Erfindung. Der Hauptkältemittelkreislauf entspricht hierbei im Wesentlichen der in Figur 4 gezeigten dritten Ausführungsform. Allerdings ist der fünfte Wärmeübertrager W₅ nun als Kühlmittel/Kältemittel-Wärmeübertrager, vorzugsweise als Platten-Wärmeübertrager, ausgebildet und steht mit einem Kühlmittelkreislauf der nachfolgend als dritter Kühlmittelkreislauf 6c bezeichnet wird, in Verbindung. Der dritte Kühlmittelkreislauf 6c umfasst hierbei des Weiteren folgende Komponenten: eine, als dritte Pumpe 7c bezeichnete, Pumpe, die Ventile 5ₕ und 5_{g} sowie zwei Wärmeübertrage, die zur besseren Unterscheidung als sechster und siebter Wärmeübertrager W₆, W₇ bezeichnet werden. Während der siebte Wärmeübertrage W₇ - wie bereits beschrieben - zur Entfeuchtung des zum Fahrgastraum strömenden Luftstroms dient, ermöglicht der sechste Wärmeübertrager W₆ eine weitere, d. h. räumlich vom siebten Wärmeübertrage W₇ getrennte, Wärmeeinbringung in den Fahrgastraum, z. B. im Bodenbereich des Fahrzeuginnenraums, um so auf vorteilhafte Weise einer vertikalen Luftschichtung entgegenzuwirken. Hierzu kann im Bereich des sechsten Wärmeübertragers W₆ ein Ventilator 9_{d} zur Regulierung des Luftstroms angeordnet sein, der unabhängig von den weiteren Ventilatoren 9ₐ und 9_{b} geregelt werden kann. Ferner umfasst die vorliegende fünfte Ausführungsform der Erfindung einen optionalen achten Wärmeübertrager W₈ im Bereich der Frischluftansaugung. Der achte Wärmeübertrager W₈ ist dabei vorzugsweise in Form eines Luft/Luft-Wärmeübertragers ausgebildet. Auf vorteilhafte Weise kann dadurch die Abwärme des Fahrgastraums zum Vorwärmen der aus dem Fahrzeugaußenraum einströmenden Frischluft genutzt werden.

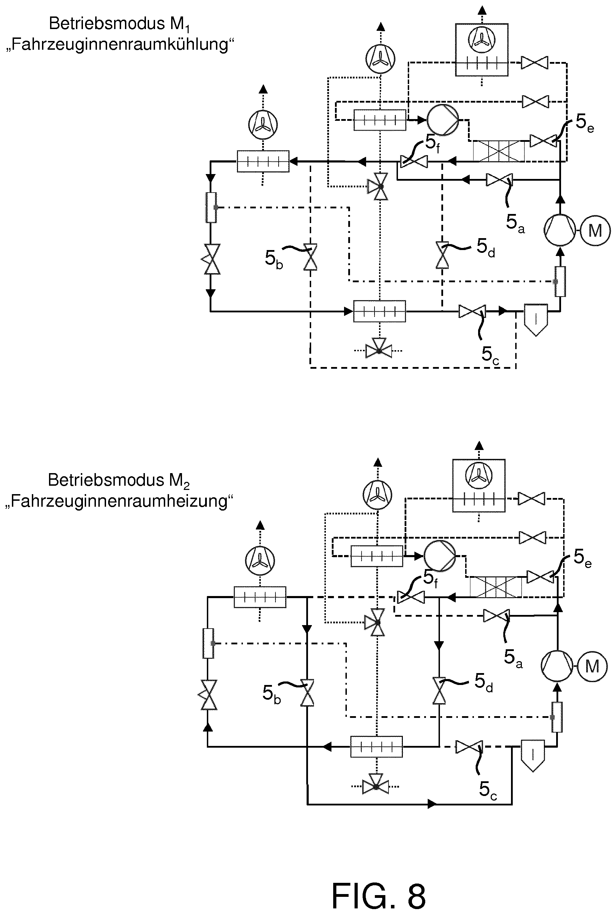

Figur 8 zeigt die Strömungsführung für die eben in Figur 7 gezeigte fünfte Ausführungsform der Erfindung im ersten und zweiten Betriebsmodus M₁ und M₂. Hierbei ist erneut in der oberen Abbildung die Strömungsführung im ersten Betriebsmodus M₁ zur Fahrzeuginnenraumkühlung und in der unteren Abbildung die Strömungsführung im zweiten Betriebsmodus M₂ zur Fahrzeuginnenraumheizung dargestellt. Abgesehen vom Fehlen des vierten Wärmeübertrages W₄ zur Energiespeicherkühlung (links unten) entspricht die Strömungsführung allerdings erneut dem bereits unter Figur 6 diskutierten Fall, weshalb für entsprechende Details auf die Figurenbeschreibung zu Figur 6 verwiesen wird. Auch in der in Figur 8 dargestellten Ausführungsform erfolgt das Umschalten zwischen den beiden Betriebsmodi M₁ und M₂ ebenfalls mittels der Ventile 5ₐ-5_{f}. Im ersten Betriebsmodus M₁ sind dabei die Ventile 5ₐ, 5_{c}, 5ₑ, und 5f geöffnet, während die Ventile 5_{b} und 5_{d} geschlossen sind. Im zweiten Betriebsmodus M₂ sind die Ventile 5_{b}, 5_{d} und 5ₑ geöffnet und die Ventile 5ₐ, 5_{c} und 5_{f} geschlossen.

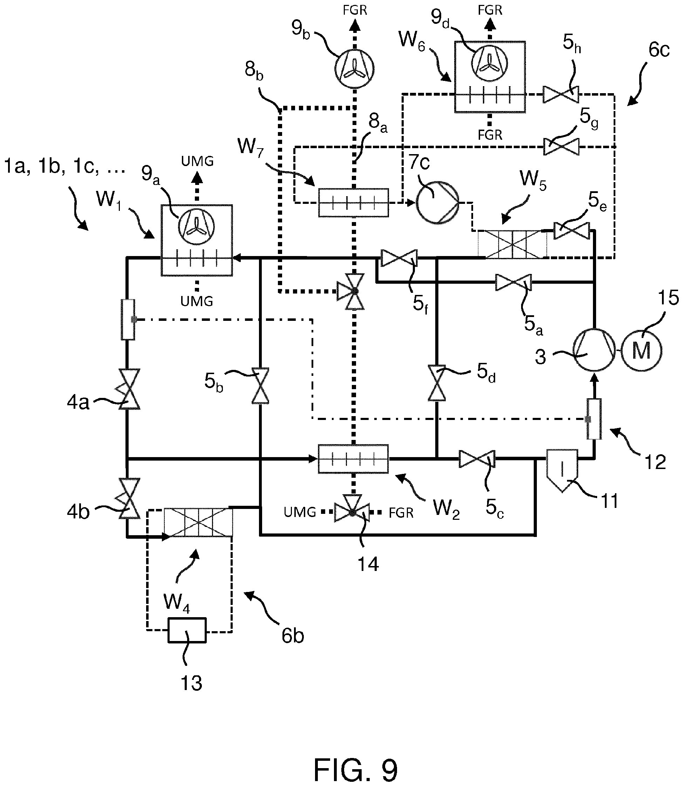

Figur 9 zeigt einen schematischen Schaltplan eines Kältemittelkreislaufs 1a, 1b, 1c eines Klimatisierungsmoduls 10a, 10b, 10c nach einer sechsten Ausführungsform der Erfindung. Der vorliegende Kältemittelkreislauf 1a, 1b, 1c entspricht dabei im Wesentlichen der zuvor in Figur 7 dargestellten Ausführungsform, weist jedoch zusätzlich eine zweite Drosseleinrichtung 4b sowie einen vierten Wärmeübertrager W₄ inklusive eines daran angeschlossenen zweiten Kühlmittelkreislaufs 6b zu Energiespeicherkühlung auf. Mögliche Varianten und Funktionen des zweiten Kühlmittelkreislaufs 6b wurden bereits vorstehend eingehend diskutiert und sind beispielsweise der Figurenbeschreibung zu Figur 3 zu entnehmen.

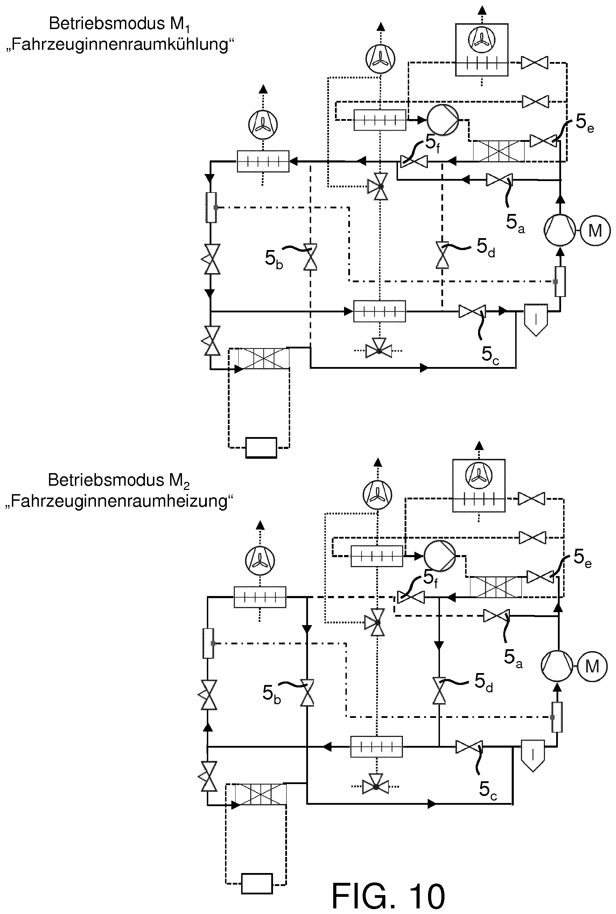

Figur 10 zeigt die Strömungsführung für die eben in Figur 9 gezeigte sechste Ausführungsform der Erfindung im ersten und zweiten Betriebsmodus M₁ und M₂. Erneut unterscheidet sich die Ausgestaltung des Hauptkältemittelkreislaufs nicht von den bisherigen Ausführungsformen, weshalb sich weitere Ausführungen erübrigen. Erneut sei hierzu auf die Figurenbeschreibung zu Figur 6 verwiesen.

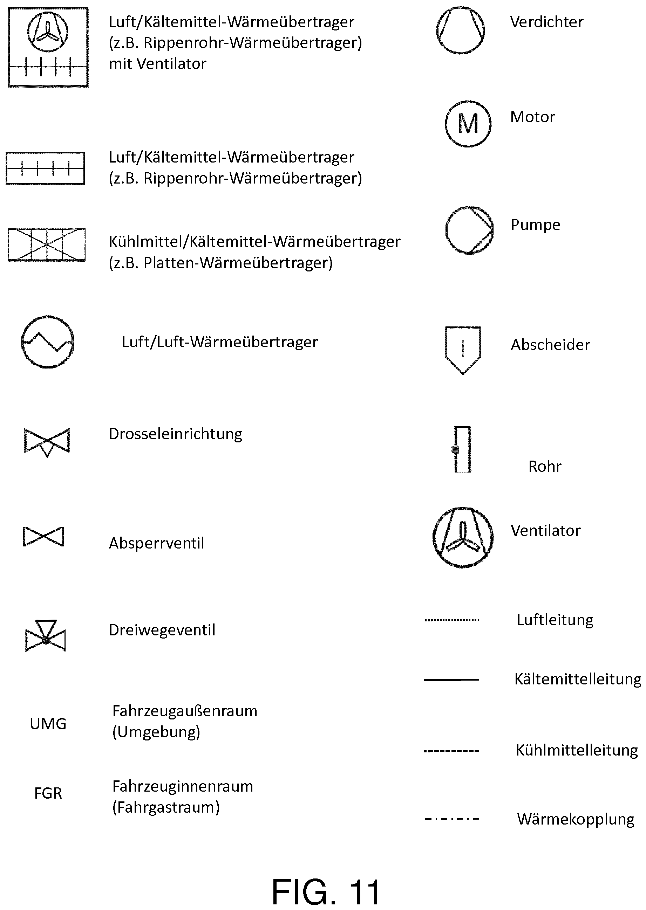

In Figur 11 ist eine Legende zu den in den Figuren 2-10 dargestellten schematischen Schaltplänen gezeigt. Die dabei verwendeten Symbole entsprechend der DIN 1861, sind jedoch aus Gründen der Übersichtlichkeit zusätzlich mit den entsprechenden Bauteilnamen bezeichnet. Obwohl die jeweils einen Kältemittelkreislauf I die Erfindung unter Bezugnahme auf bestimmte Ausführungsbeispiele beschrieben worden ist, ist es für einen Fachmann ersichtlich, dass verschiedene Änderungen ausgeführt werden können, den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1a, 1b, 1c: Kältemittelkreislauf
- 2a, 2b, 2c: Modul-Steuereinrichtung
- 3: Verdichter
- 4a: Erste Drosseleinrichtung
- 4b: Zweite Drosseleinrichtung
- 5: Ventileinrichtung
- 5ₐ-5ₕ: Ventile
- 6a: Erster Kühlmittelkreislauf
- 6b: Zweiter Kühlmittelkreislauf
- 6c: Dritter Kühlmittelkreislauf
- 7a: Erste Pumpe
- 7b: Zweite Pumpe
- 7c: Dritte Pumpe
- 8ₐ, 8_{b}: Luftleitung
- 9ₐ-9_{d}: Ventilator
- 10a, 10b, 10c: Klimatisierungsmodul
- 11: Sammler
- 12: Zusatzkühler
- 13: Energiespeicher
- 14: Dreiwegeventil
- 15: Motor
- 16a: Erster Bereich
- 16b: Zweiter Bereich
- 16c: Dritter Bereich
- 17: Trennwand
- 18a: Erster Innenraumbereich
- 18b: Zweiter Innenraumbereich
- 20: Zentrale Steuereinrichtung
- 30: Nutzfahrzeug
- W₁: Erster Wärmeübertrager
- W₂: Zweiter Wärmeübertrager
- W₃: Dritter Wärmeübertrager
- W₄: Vierter Wärmeübertrager
- W5: Fünfter Wärmeübertrager
- UMG: Umgebung
- FGR: Fahrgastraum

## Patentansprüche

1. Modulare Klimatisierungsvorrichtung (100) für ein Kraftfahrzeug (30), vorzugsweise für ein elektrisch angetriebenes Kraftfahrzeug (30), umfassend:
a) mindestens zwei Klimatisierungsmodule (10a, 10b), die jeweils einen Kältemittelkreislauf (1a, 1b) mit folgende Komponenten umfassen:
- einen, vorzugsweise elektrisch angetriebenen, Verdichter (3);
- einen ersten Wärmeübertrager (W₁) zum Wärmeaustausch mit einem Fahrzeugaußenraum und/oder einer Komponente eines elektrischen Antriebs;
- eine erste Drosseleinrichtung (4a);
- einen zweiten Wärmeübertrager (W₂) zum Wärmeaustausch mit einem Fahrzeuginnenraum und/oder einer Komponente eines elektrischen Antriebs; und
- eine Ventileinrichtung (5), umfassend eine Mehrzahl von Ventilen (5ₐ-5_{d}), zur Steuerung eines Kältemittelflusses innerhalb des Kältemittelkreislaufs (1a, 1b), mittels derer der erste Wärmeübertrager (W₁) in einem ersten Betriebsmodus M₁, vorzugsweise zur Fahrzeuginnenraumkühlung, stromauf und in einem zweiten Betriebsmodus M₂, vorzugsweise zur Fahrzeuginnenraumheizung, stromab vom zweiten Wärmeübertrager (W₂) im Kältemittelkreislauf (1a, 1b) schaltbar ist;
und wobei die Klimatisierungsmodule (10a, 10b) jeweils eine Modul-Steuereinrichtung (2a, 2b) zur jeweiligen Ansteuerung der Ventileinrichtung (5) und/oder des Verdichters (3) umfassen;
b) eine zentrale Steuereinrichtung (20), die ausgebildet ist, in Abhängigkeit mindestens einer überwachten Betriebsbedingung eine Anzahl aktiver Klimatisierungsmodule (10a, 10b) festzulegen und festzulegen, ob ein aktives Klimatisierungsmodul (10a, 10b) im ersten oder zweiten Betriebsmodus M₁ oder M₂ betrieben wird.

2. Modulare Klimatisierungsvorrichtung (100) nach Anspruch 1, **dadurch gekennzeichnet, dass** die mindestens eine Betriebsbedingung erfüllt ist, falls eine Vereisung mindestens eines Klimatisierungsmoduls (10a, 10b) vorliegt, und die zentrale Steuereinrichtung (20) ausgebildet ist, vereiste Klimatisierungsmodule (10a, 10b) zu bestimmen und diese in einem Enteisungsmodus zur Reduzierung einer Vereisung zu betreiben.

3. Modulare Klimatisierungsvorrichtung (100) nach Anspruch 2, **dadurch gekennzeichnet, dass** der Enteisungsmodus einen Wechsel des Betriebsmodus mindestens eines vereisten Klimatisierungsmoduls (10a, 10b) vom ersten Betriebsmodus M₁ in den zweiten Betriebsmodus M₂, oder umgekehrt, umfasst.

4. Modulare Klimatisierungsvorrichtung (100) nach Anspruch 2 oder 3, **dadurch gekennzeichnet, dass** der Enteisungsmodus
a) ein Aktivieren oder Deaktivieren mindestens eines vereisten Klimatisierungsmoduls (10a, 10b) umfasst; und/oder
b) einen Betrieb mindestens eines vereisten Klimatisierungsmoduls (10a, 10b) in einem vom optimalen Betriebspunkt abweichenden und/oder ineffizienten Betriebspunkt umfasst.

5. Modulare Klimatisierungsvorrichtung (100) nach einem der Ansprüche 2 bis 4, **dadurch gekennzeichnet, dass** die zentrale Steuereinrichtung (20) ausgebildet ist, zur Leistungskompensation
a) nicht vereiste Klimatisierungsmodule (10a, 10b) zu aktivieren; und/oder
b) bereits aktivierte nicht vereiste Klimatisierungsmodule (10a, 10b) bei höherer Leistung zu betreiben.

6. Modulare Klimatisierungsvorrichtung (100) nach einem der vorherigen Ansprüche, **dadurch gekennzeichnet, dass** die mindestens eine Betriebsbedingung erfüllt ist, falls ein Teillastbetrieb vorliegt, und die zentrale Steuereinrichtung (20) ausgebildet ist, zur Wirkungsgradoptimierung in einem Teillastbetrieb einen Teil der Klimatisierungsmodule (10a, 10b) zu deaktivieren, wobei die verbleibenden aktiven Klimatisierungsmodule (10a, 10b) mit einem im Vergleich zu einem Betrieb aller Klimatisierungsmodule (10a, 10b) höheren Wirkungsgrad betreibbar sind.

7. Modulare Klimatisierungsvorrichtung (100) nach einem der vorherigen Ansprüche, **dadurch gekennzeichnet, dass** die mindestens eine Betriebsbedingung erfüllt ist, falls ein Arbeitsstunden-Ungleichgewicht der Klimatisierungsmodule (10a, 10b) vorliegt, und die zentrale Steuereinrichtung (20) ausgebildet ist, in einem Teillastbetrieb einen Teil der Klimatisierungsmodule (10a, 10b) zu deaktivieren, wobei die deaktivierten Klimatisierungsmodule (10a, 10b) im Durchschnitt eine höhere Anzahl an Arbeitsstunden aufweisen als die aktiven Klimatisierungsmodule (10a, 10b).

8. Modulare Klimatisierungsvorrichtung (100) nach Anspruch 7, **dadurch gekennzeichnet,** die zentrale Steuereinrichtung (20) ausgebildet ist, im Teillastbetrieb bevorzugt das Klimatisierungsmodul (10a, 10b) mit den meisten Arbeitsstunden zu deaktivieren.

9. Kraftfahrzeug (30), vorzugsweise Nutzfahrzeug, mit einer modularen Klimatisierungsvorrichtung (100) nach einem der Ansprüche 1-8.

10. Kraftfahrzeug (30) nach Anspruch 9, **dadurch gekennzeichnet, dass** das Kraftfahrzeug ein, vorzugsweise elektrisch angetriebener, Omnibus mit im Dachbereich in Längsrichtung verteilt angeordneten Klimatisierungsmodulen (10a, 10b) ist, wobei die zentrale Steuereinrichtung (20) ausgebildet ist, wahlweise alle oder einen Teil der Klimatisierungsmodule (10a, 10b) zu aktivieren, um wahlweise den gesamten Innenraum oder Teilbereiche zu klimatisieren.

11. Kraftfahrzeug (30) nach Anspruch 9 oder 10, **dadurch gekennzeichnet, dass** das Kraftfahrzeug (30) mindestens eine ein- und ausfahrbare Trennwand (17) zur Trennung Innenraums in verschiedene Innenraumbereiche (18a, 18b) umfasst, wobei jedem Innenraumbereich (18a, 18b) mindestens ein Klimatisierungsmodul (10a, 10b) zur Klimatisierung des jeweiligen Innenraumbereichs (18a, 18b) zugeordnet ist.

12. Verfahren zur Vorkonfiguration einer modularen Klimatisierungsvorrichtung (100) für ein Kraftfahrzeug (30), vorzugsweise für ein elektrisch angetriebenes Kraftfahrzeug (30), nach einem der Ansprüche 1 bis 8, umfassend die Schritte:
- Festlegen einer Art und/oder Anzahl der am Kraftfahrzeug (30) zu montierenden Klimatisierungsmodule (10a, 10b) in Abhängigkeit eines Einsatzgebiets und/oder Nennleistungsbedarfs des Kraftfahrzeugs (30); und
- Montieren der festgelegten Art und/oder Anzahl der Klimatisierungsmodule (10a, 10b) am Kraftfahrzeug (30).

13. Verfahren nach Anspruch 12, **dadurch gekennzeichnet, dass**, falls das Einsatzgebiet ein Heißland ist, mehr Klimatisierungsmodule (10a, 10b) montiert werden, als im Fall, dass das Einsatzgebiet kein Heißland ist.

14. Verfahren nach Anspruch 12 oder 13, **dadurch gekennzeichnet, dass** der Schritt des Festlegens einer Art und/oder Anzahl der am Kraftfahrzeug (30) zu montierenden Klimatisierungsmodule (10a, 10b) in Abhängigkeit des Fahrzeugtyps und/oder der Fahrzeuggröße erfolgt.

## Claims

1. A modular air-conditioning device (100) for a motor vehicle (30), preferably for an electrically driven motor vehicle (30), comprising:
a) at least two air-conditioning modules (10a, 10b), which respectively comprise a refrigerant circuit (1a, 1b) with the following components:
- a, preferably electrically driven, compressor (3) ;
- a first heat exchanger (W₁) for heat exchange with the space outside the vehicle and/or a component of an electric drive;
- a first throttling device (4a);
- a second heat exchanger (W₂) for heat exchange with the space inside the vehicle and/or a component of an electric drive; and
- a valve device (5), comprising a plurality of valves (5ₐ-5_{d}), for controlling a refrigerant flow within the refrigerant circuit (1a, 1b), by means of which the first heat exchanger (W₁) can be switched in a first operating mode M₁, preferably for cooling the space inside the vehicle, upstream and in a second operating mode M₂, preferably for heating the space inside the vehicle, downstream of the second heat exchanger (W₂) in the refrigerant circuit (1a, 1b);
and wherein the air-conditioning modules (10a, 10b) respectively comprise a module control device (2a, 2b) for the respective activation of the valve device (5) and/or the compressor (3);
b) a central control device (20), which is designed to establish a number of active air-conditioning modules (10a, 10b) on the basis of at least one monitored operating condition and to establish whether an active air-conditioning module (10a, 10b) is operated in the first or second operating mode M₁ or M₂.

2. The modular air-conditioning device (100) according to Claim 1, **characterized in that** the at least one operating condition is satisfied if there is icing of at least one air-conditioning module (10a, 10b), and the central control device (20) is designed to determine iced air-conditioning modules (10a, 10b) and to operate them in a deicing mode to reduce the icing.

3. The modular air-conditioning device (100) according to Claim 2, **characterized in that** the deicing mode comprises a change of the operating mode of at least one iced air-conditioning module (10a, 10b) from the first operating mode M₁ to the second operating mode M₂, or vice versa.

4. The modular air-conditioning device (100) according to Claim 2 or 3, **characterized in that** the deicing mode
a) comprises activating or deactivating at least one iced air-conditioning module (10a, 10b); and/or
b) comprises operation of at least one iced air-conditioning module (10a, 10b) at an operating point deviating from the optimum operating point and/or at an inefficient operating point.

5. The modular air-conditioning device (100) according to one of Claims 2 to 4, **characterized in that**, for power compensation, the central control device (20) is designed
a) to activate non-iced air-conditioning modules (10a, 10b); and/or
b) to operate already activated non-iced air-conditioning modules (10a, 10b) at higher power.

6. The modular air-conditioning device (100) according to one of the preceding claims, **characterized in that** the at least one operating condition is satisfied if there is partial-load operation, and the central control device (20) is designed to deactivate some of the air-conditioning modules (10a, 10b) in partial-load operation to optimize efficiency, the remaining active air-conditioning modules (10a, 10b) being able to operate at higher efficiency in comparison with operation of all of the air-conditioning modules (10a, 10b).

7. The modular air-conditioning device (100) according to one of the preceding claims, **characterized in that** the at least one operating condition is satisfied if there is an imbalance in the operating hours of the air-conditioning modules (10a, 10b), and the central control device (20) is designed to activate some of the air-conditioning modules (10a, 10b) in partial-load operation, the activated air-conditioning modules (10a, 10b) having on average a higher number of operating hours than the activated air-conditioning modules (10a, 10b).

8. The modular air-conditioning device (100) according to Claim 7, **characterized in that** the central control device (20) is designed to deactivate preferably the air-conditioning module (10a, 10b) with the most operating hours in partial-load operation.

9. A motor vehicle (30), preferably a commercial vehicle, with a modular air-conditioning device (100) according to one of Claims 1 to 8.

10. The motor vehicle (30) according to Claim 9, **characterized in that** the motor vehicle is a, preferably electrically driven, omnibus with air-conditioning modules (10a, 10b) arranged distributed in the longitudinal direction in the roof area, the central control device (20) being designed optionally to activate all or some of the air-conditioning modules (10a, 10b) in order optionally to air-condition the entire interior space or partial areas.

11. The motor vehicle (30) according to Claim 9 or 10, **characterized in that** the motor vehicle (30) comprises at least one retractable and extendable dividing wall (17) for dividing the interior space into various interior spatial areas (18a, 18b), each interior spatial area (18a, 18b) being assigned at least one air-conditioning module (10a, 10b) for air-conditioning the respective interior spatial area (18a, 18b).

12. A method for reconfiguring a modular air-conditioning device (100) for a motor vehicle (30), preferably for an electrically driven motor vehicle (30), according to one of Claims 1 to 8, comprising the steps of:
- establishing a type and/or number of air-conditioning modules (10a, 10b) to be fitted on the motor vehicle (30) on the basis of an area of use and/or nominal power requirement of the motor vehicle (30); and
- fitting the established type and/or number of air-conditioning modules (10a, 10b) on the motor vehicle (30).

13. The method according to Claim 12, **characterized in that**, if the area of use is a hot country, more air-conditioning modules (10a, 10b) are fitted than in the case where the area of use is not a hot country.

14. The method according to Claim 12 or 13, **characterized in that** the step of establishing a type and/or number of air-conditioning modules (10a, 10b) to be fitted on the motor vehicle (30) is taken on the basis of the vehicle type and/or the vehicle size.

## Revendications

1. Dispositif de climatisation modulaire (100) destiné à un véhicule automobile (30), de préférence un véhicule automobile à entraînement électrique (30), ledit dispositif comprenant :
a) au moins deux modules de climatisation (10a, 10b) qui comprennent chacun un circuit de réfrigérant (1a, 1b) pourvu des composants suivants :
- un compresseur (3) de préférence entraîné électriquement ;
- un premier échangeur de chaleur (W₁) destiné à échanger de la chaleur avec un espace extérieur de véhicule et/ou un composant d'un entraînement électrique ;
- un premier moyen d'étranglement (4a) ;
- un deuxième échangeur de chaleur (W₂) destiné à échanger de la chaleur avec un espace intérieur de véhicule et/ou un composant d'un entraînement électrique ; et
- un moyen à soupapes (5) qui comprend une pluralité de soupapes (5ₐ-5_{d}), qui est destiné à commander un débit de réfrigérant à l'intérieur du circuit de réfrigérant (1a, 1b) et qui permet de commuter dans le circuit de réfrigérant (1a, 1b) le premier échangeur de chaleur (W₁) dans un premier mode de fonctionnement M₁, de préférence pour refroidir l'espace intérieur de véhicule, en amont du deuxième échangeur de chaleur (W₂) et dans un deuxième mode de fonctionnement M₂, de préférence pour chauffer l'espace intérieur de véhicule, en aval du deuxième échangeur de chaleur (W₂) ;
et les modules de climatisation (10a, 10b) comprenant chacun un moyen de commande de module (2a, 2b) destiné à commander respectivement le moyen à soupapes (5) et/ou le compresseur (3) ;
b) un moyen de commande central (20) qui est conçu pour déterminer un nombre de modules de climatisation actifs (10a, 10b) en fonction d'au moins une condition de fonctionnement surveillée et pour déterminer si un module de climatisation actif (10a, 10b) est en fonctionnement dans le premier ou le deuxième mode de fonctionnement M₁ ou M₂.

2. Dispositif de climatisation modulaire (100) selon la revendication 1, **caractérisé en ce que** l'au moins une condition de fonctionnement est remplie en cas de givrage d'au moins un module de climatisation (10a, 10b), et le moyen de commande central (20) est conçu pour déterminer des modules de climatisation givrés (10a, 10b) et pour les faire fonctionner en mode dégivrage afin de réduire le givrage.

3. Dispositif de climatisation modulaire (100) selon la revendication 2, **caractérisé en ce que** le mode de dégivrage comprend un passage du mode de fonctionnement d'au moins un module de climatisation givré (10a, 10b) du premier mode de fonctionnement M₁ au deuxième mode de fonctionnement M₂, ou inversement.

4. Dispositif de climatisation modulaire (100) selon la revendication 2 ou 3, **caractérisé en ce que** le mode de dégivrage comprend
a) une activation ou désactivation d'au moins un module de climatisation givré (10a, 10b) ; et/ou
b) un fonctionnement d'au moins un module de climatisation givré (10a, 10b) à un point de fonctionnement qui s'écarte du point de fonctionnement optimal et/ou qui est inefficace.

5. Dispositif de climatisation modulaire (100) selon l'une des revendications 2 à 4, **caractérisé en ce que** le moyen de commande central (20) est conçu
a) pour activer des modules de climatisation non givrés (10a, 10b) ; et/ou
b) pour faire fonctionner des modules de climatisation non givrés déjà activés (10a, 10b) à puissance plus élevée,
afin d'effectuer une compensation de puissance.

6. Dispositif de climatisation modulaire (100) selon l'une des revendications précédentes, **caractérisé en ce que** l'au moins une condition de fonctionnement est remplie en cas de fonctionnement à charge partielle, et le moyen de commande central (20) est conçu pour désactiver une partie des modules de climatisation (10a, 10b) afin d'optimiser le rendement dans un fonctionnement en charge partielle, les modules de climatisation actifs restants (10a, 10b) pouvant être actionnés avec un rendement plus élevé que lorsque tous les modules de climatisation (10a, 10b) sont actionnés.

7. Dispositif de climatisation modulaire (100) selon l'une des revendications précédentes, **caractérisé en ce que** l'au moins une condition de fonctionnement est remplie en cas de déséquilibre des heures de travail des modules de climatisation (10a, 10b), et le moyen de commande central (20) est conçu pour désactiver une partie des modules de climatisation (10a, 10b) en fonctionnement à charge partielle, les modules de climatisation désactivés (10a, 10b) ayant en moyenne un nombre d'heures de travail plus élevé que les modules de climatisation actifs (10a, 10b).

8. Dispositif de climatisation modulaire (100) selon la revendication 7, **caractérisé en ce que** le moyen de commande central (20) est conçu pour désactiver, en fonctionnement à charge partielle, de préférence le module de climatisation (10a, 10b) ayant le plus d'heures de travail.

9. Véhicule automobile (30), de préférence véhicule utilitaire, comprenant un dispositif de climatisation modulaire (100) selon l'une des revendications 1 à 8.

10. Véhicule automobile (30) selon la revendication 9, **caractérisé en ce que** le véhicule automobile est un omnibus de préférence à entraînement électrique comprenant des modules de climatisation (10a, 10b) répartis longitudinalement dans la zone de toit, le moyen de commande central (20) étant conçu pour activer sélectivement tout ou partie des modules de climatisation (10a, 10b) afin de climatiser sélectivement tout l'espace intérieur ou des zones partielles.

11. Véhicule automobile (30) selon la revendication 9 ou 10, **caractérisé en ce que** le véhicule automobile (30) comprend au moins une cloison escamotable et extensible (17) destinée à diviser l'espace intérieur en différentes zones d'espace intérieur (18a, 18b), chaque zone d'espace intérieur (18a, 18b) étant associée à au moins un module de climatisation (10a, 10b) afin de climatiser la zone d'espace intérieure respective (18a, 18b).

12. Procédé de pré-configuration d'un dispositif de climatisation modulaire (100) destiné à un véhicule automobile (30), de préférence un véhicule automobile à entraînement électrique (30), selon l'une des revendications 1 à 8, ledit procédé comprenant les étapes suivantes :
- définir un type et/ou un nombre de modules de climatisation (10a, 10b) à monter sur le véhicule automobile (30) en fonction d'une région d'utilisation et/ou d'un besoin en puissance nominale du véhicule automobile (30) ; et
- monter le type et/ou le nombre défini de modules de climatisation (10a, 10b) sur le véhicule automobile (30) .

13. Procédé selon la revendication 12, **caractérisé en ce que**, si la région d'utilisation est un pays chaud, on installe plus de modules de climatisation (10a, 10b) que dans le cas où la région d'utilisation n'est pas un pays chaud.

14. Procédé selon la revendication 12 ou 13, **caractérisé en ce que** l'étape de détermination d'un type et/ou d'un nombre de modules de climatisation (10a, 10b) à monter sur le véhicule automobile (30) s'effectue en fonction du type de véhicule et/ou de la taille du véhicule.
